# DEMANDE DE BREVET EUROPEEN

(11) **EP 4 647 037 A2**
(43) Date de publication de la demande: **12.11.2025**
(21) Numéro de dépôt: 25191657.3
(22) Date de dépôt: 20.05.2020
(51) Int. Cl.: A61C 7/08

(54) **PROCEDE DE GENERATION D'UN MODELE D'UNE ARCADE DENTAIRE**

(30) Priorité: 22.05.2019 FR 1905357
(62) Demande divisionnaire de: 20726474.8
(71) Demandeur: Dental Monitoring, 75017 Paris (FR)
(72) Inventeur: SALAH, Philippe, 75020 Paris (FR); DEBRAUX, Laurent, 75020 Paris (FR); PELLISSARD, Thomas, 75004 Paris (FR)
(74) Mandataire: Ipsilon

(57) **Abrégé**

Procédé de génération d'un modèle numérique tridimensionnel d'une arcade dentaire d'un patient, dit « modèle actualisé », au cours d'un traitement de ladite arcade dentaire avec une gouttière orthodontique, dite « gouttière active », ledit traitement ayant été simulé au moyen d'un scénario de traitement généré à un instant initial (t1) et comportant une pluralité de modèles intermédiaires (Mi), chaque modèle intermédiaire étant un modèle numérique tridimensionnel de l'arcade dentaire, ledit modèle intermédiaire étant découpé en modèles de dent et étant déterminé pour représenter l'arcade dentaire à un instant intermédiaire (ti) respectif postérieur à l'instant initial, le procédé de génération comportant les étapes suivantes : 1) à un instant actualisé au cours du traitement, acquisition d'au moins une image actualisée, chaque image actualisée étant une image de gouttière (Ig) représentant la gouttière active fixée, en position de service, sur l'arcade dentaire, ou une image de dentition nue (Id) représentant l'arcade dentaire sans gouttière ;
2) avant l'étape 4), de préférence avant l'étape 3), détermination, en fonction de l'instant actualisé, d'un dit modèle intermédiaire, ou « modèle intermédiaire actif » ;
3) recherche, sur une image actualisée, dite « image actualisée d'analyse », d'une ou plusieurs représentations de dents non conformes avec le scénario de traitement ;
si une ou plusieurs dents non conformes sont détectées,
4) identification d'un ou plusieurs modèles de dent représentant la ou les dents non conformes, respectivement, dans le modèle intermédiaire actif, c'est-à-dire de dent qui n'est pas dans la position prévue dans le scénario de traitement ;
5) déformation du modèle intermédiaire actif jusqu'à obtenir un modèle actualisé compatible avec au moins une dite image actualisée, dite « image actualisée de déformation »

procédé dans lequel on mesure la non-conformité d'au moins une dite dent non conforme par comparaison de ladite image actualisée avec le modèle intermédiaire actif, puis à l'étape 5), on déplace, en fonction de ladite mesure, le modèle de dent de ladite au moins une dent non conforme;
l'étape 2) étant effectuée par un ordinateur en comparant l'instant actualisé avec les instants intermédiaires des modèles intermédiaires du scénario de traitement.

## Description

### Domaine technique

La présente invention concerne un procédé de génération d'un modèle tridimensionnel numérique d'une arcade dentaire.

L'invention concerne aussi un procédé de fabrication de gouttières orthodontiques, ou « aligneurs », au moyen d'un procédé de génération selon l'invention, notamment pour adapter un traitement orthodontique au moyen de telles gouttières.

L'invention concerne enfin un système informatique pour la mise en œuvre de ces procédés.

### Etat de la technique

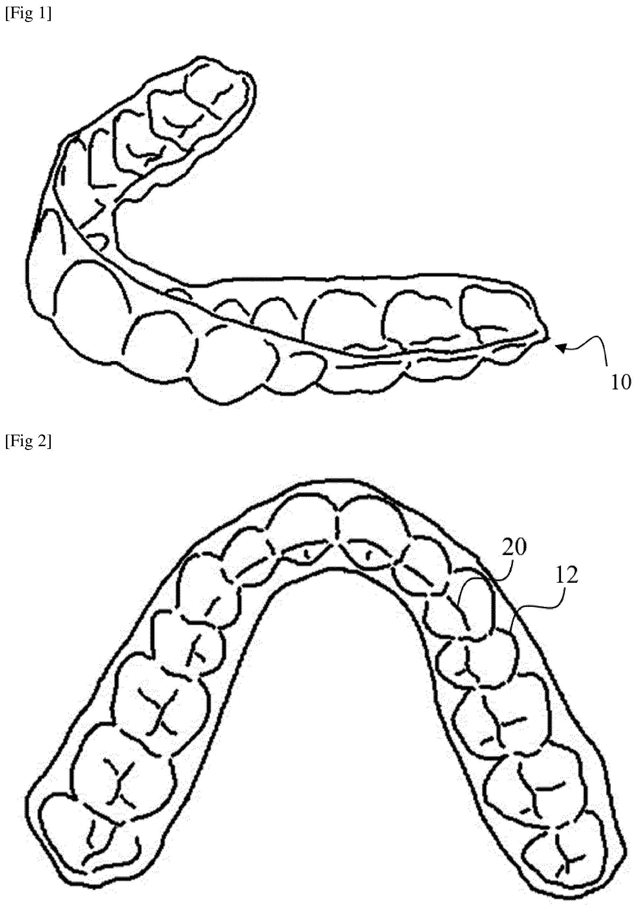

Comme représenté sur les figures 1 et 2, une gouttière orthodontique (« *aligner* » en anglais) 10 se présente classiquement sous la forme d'un appareil monobloc amovible, classiquement en un matériau polymère transparent, conformé pour suivre les dents successives de l'arcade sur laquelle elle est fixée. Elle comporte une goulotte 12, de forme générale en « U », conformée pour que plusieurs dents d'une arcade, généralement toutes les dents d'une arcade, puissent y être logées.

La forme de la goulotte est déterminée pour assurer la fixation de la gouttière sur les dents, mais également en fonction d'un positionnement cible souhaité pour les dents. Plus précisément, la forme est déterminée de manière que, lorsque la gouttière est dans sa position de service, elle exerce des contraintes tendant à déplacer les dents traitées vers le positionnement cible.

On détermine classiquement, au début du traitement orthodontique, les formes que doivent prendre les différentes gouttières à différents instants du traitement, puis on fait fabriquer l'ensemble des gouttières correspondantes. A cet effet, il est connu de procéder suivant les étapes suivantes :
- génération, à un instant initial *t₁,* typiquement en début de traitement, d'un modèle numérique tridimensionnel d'une arcade dentaire du patient, dit « modèle initial », ladite arcade étant dans une configuration initiale, et découpage du modèle initial en modèles de dents ;
- détermination d'un traitement orthodontique adapté pour modifier l'arcade depuis ladite configuration initiale, par l'intermédiaire de configurations intermédiaires à des instants intermédiaires respectifs *tₙ, n* étant compris entre 2 et N, jusqu'à une configuration finale, à un instant final *t_{N+1}* ;

- déformation du modèle initial de manière à générer des modèles intermédiaires et final représentant l'arcade dentaire dans les configurations intermédiaires et finale, respectivement ;
- détermination, à partir des modèles initial, intermédiaires et final, d'une série de N gouttières, la première gouttière étant destinée à être portée jusqu'à l'instant *t₂* et la n^{ième} gouttière étant destinée à être portée depuis l'instant *tₙ* jusqu'à l'instant *tₙ₊₁* ;
- fabrication d'au moins une partie des gouttières.

On remet ensuite l'ensemble des gouttières fabriquées au patient afin qu'aux instants intermédiaires prédéterminés, il change de gouttière.

A intervalles réguliers pendant le traitement, le patient se déplace chez l'orthodontiste pour un contrôle visuel, notamment pour vérifier si le déplacement des dents est conforme aux attentes et si la gouttière qu'il porte est toujours adaptée au traitement.

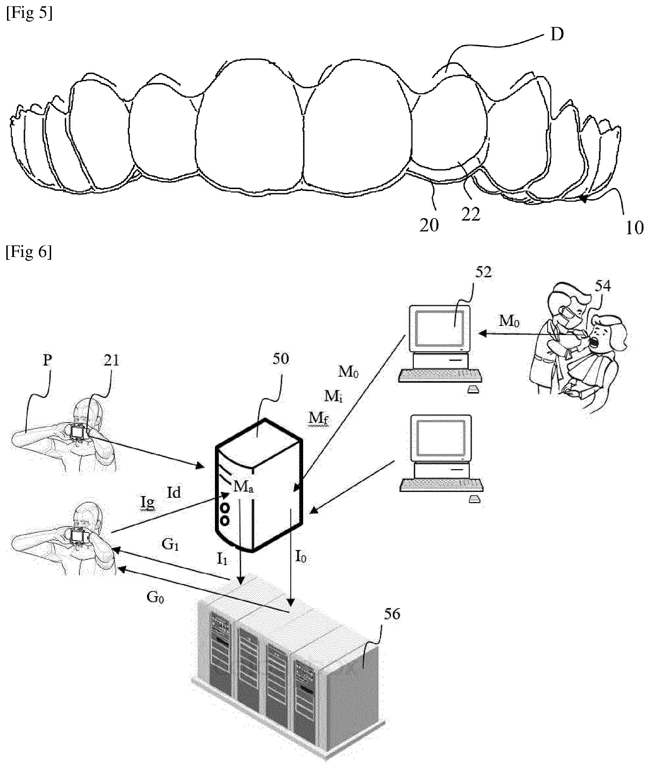

En particulier, l'orthodontiste peut visuellement diagnostiquer un décollement de la gouttière. En effet, le fond 20 de la goulotte présente une forme sensiblement complémentaire à celle des extrémités libres 22 des dents (figure 5). En conséquence, le contour du fond de la goulotte peut être comparé au contour des dents D pour évaluer un écartement entre le fond de la goulotte et une ou plusieurs extrémités libres de dents.

En cas de détection d'un décollement, l'orthodontiste effectue une nouvelle empreinte des dents, ou, de manière équivalente, un nouveau scan des dents, puis reprend le processus décrit précédemment pour concevoir et fabriquer une nouvelle série de gouttières.

La nécessité de devoir se déplacer chez l'orthodontiste est une contrainte pour le patient. La confiance du patient en son orthodontiste peut être également entamée. Enfin, il en résulte un coût supplémentaire. Le nombre de visites de contrôle chez l'orthodontiste doit donc être limité.

Par ailleurs, l'inadaptation d'une gouttière peut être également inesthétique.

Pour résoudre ces problèmes, le Demandeur a proposé, dans EP 3 412 245, un procédé d'évaluation de la forme d'une gouttière orthodontique portée par un patient.

Ce procédé permet avantageusement de détecter à distance un décollement (ou « unseat ») de la gouttière. Il facilite considérablement l'évaluation de la bonne adéquation de la gouttière au traitement. En particulier, il peut être mis en œuvre à partir de simples images, et en particulier à partir de photographies ou films, pris sans précaution particulière, par exemple par le patient. Le nombre de rendez-vous chez l'orthodontiste peut donc être limité. Cependant, lorsqu'une dent non conforme au traitement est détectée, notamment en cas de décollement entre la gouttière et une dent, un rendez-vous doit être pris chez l'orthodontiste afin de faire réaliser une nouvelle série de gouttières. Outre la contrainte que cela impose au patient, ce rendez-vous implique un retard dans le traitement. En effet, le traitement doit être interrompu entre l'instant où le décollement a été détecté et la réception des nouvelles gouttières.

Il existe un besoin pour une solution répondant à ces problèmes.

Un but de l'invention est de répondre, au moins partiellement, à ce besoin.

### Exposé de l'invention

### Résumé de l'invention

L'invention fournit un procédé de génération d'un modèle numérique tridimensionnel d'une arcade dentaire d'un patient, dit « modèle actualisé », au cours d'un traitement de ladite arcade dentaire avec une gouttière orthodontique, dite « gouttière active », en particulier dans le cadre d'un traitement avec une série de gouttières orthodontiques destinées à être fixées successivement sur ladite arcade, ledit traitement ayant été simulé au moyen d'un scénario de traitement généré à un instant initial *t₁,* par exemple en début de traitement, le scénario de traitement comportant une pluralité de modèles intermédiaires, chaque modèle intermédiaire étant un modèle numérique tridimensionnel de l'arcade dentaire, ledit modèle intermédiaire étant découpé en modèles de dent et étant déterminé pour représenter l'arcade dentaire à un instant intermédiaire respectif postérieur à l'instant initial.

Un procédé de génération selon l'invention comporte les étapes suivantes :
1) à un instant actualisé au cours du traitement, acquisition d'au moins une image actualisée, chaque image actualisée étant une image de gouttière représentant la gouttière active fixée, en position de service, sur l'arcade dentaire, ou une image de dentition nue représentant l'arcade dentaire sans gouttière ;
2) avant l'étape 4), de préférence avant l'étape 3), détermination, en fonction de l'instant actualisé, d'un dit modèle intermédiaire, ou « modèle intermédiaire actif » ;
3) recherche, sur une image actualisée, dite « image actualisée d'analyse », d'une ou plusieurs représentations de dents non conformes avec le scénario de traitement ;
   si une ou plusieurs dents non conformes sont détectées,
4) identification d'un ou plusieurs modèles de dent représentant la ou les dents non conformes, respectivement, dans le modèle intermédiaire actif ;
5) déformation du modèle intermédiaire actif jusqu'à obtenir un modèle actualisé compatible avec au moins une desdites images actualisées, dite « image actualisée de déformation ».

L'invention repose sur le fait qu'un modèle intermédiaire d'un scénario de traitement conçu avant le début du traitement modélise correctement l'arcade dentaire, à l'instant intermédiaire correspondant, si on ignore les dents non conformes. En particulier, si la gouttière n'est pas décollée d'une dent, c'est un signe que le traitement se déroule comme prévu pour cette dent. A un instant intermédiaire proche de l'instant actualisé, le modèle intermédiaire correspondant est donc conforme à la réalité pour les dents « conformes », qui sont généralement très majoritaires. Il est ainsi possible d'utiliser ce modèle intermédiaire actif, classiquement initialement généré pour la fabrication de gouttières, comme point de départ pour créer un modèle actualisé.

En particulier, il est possible d'exploiter immédiatement toute la partie du modèle intermédiaire actif relative aux dents conformes. Le modèle actualisé peut donc être construit à partir du modèle intermédiaire actif, en ne recherchant que la position conforme à la réalité des seuls modèles de dent des dents non conformes.

Avantageusement, le patient n'a donc plus besoin de faire un nouveau scan pour adapter les gouttières à une évolution négative de son traitement. Le scénario de traitement et une ou de préférence plusieurs images actualisées suffisent. Le traitement en est considérablement simplifié et accéléré.

Par ailleurs, la détermination du modèle actualisé est simplifiée non seulement parce que le nombre de modèles de dent à déplacer est très limité -typiquement de 1 à 5 modèles de dent représentent des dents non conformes-, mais aussi parce que ces déplacements sont contraints par les modèles de dent des dents conformes.

Le procédé peut comporter, avant l'étape 1), la génération du scénario de traitement comportant ladite pluralité de modèles intermédiaires. La génération du scénario de traitement est postérieure à la détermination du traitement lui-même. La génération du scénario de traitement peut être également réalisée simultanément à la détermination du traitement lui-même.

Un procédé selon l'invention peut encore comporter une ou plusieurs des caractéristiques optionnelles suivantes :
- au moins une partie, voire tous les modèles intermédiaires du scénario de traitement représentent l'arcade dentaire dans des configurations prévues à des instants intermédiaires marquant des changements de gouttière ;
- à l'étape 1), on envoie un rappel au patient, de préférence sur son téléphone mobile, pour qu'il prenne au moins une image actualisée, de préférence au moins une image de gouttière et de préférence au moins une image de dentition nue ;
- à l'étape 1), plus de deux images actualisées sont acquises, de préférence plus de 4 images actualisées ;
- à l'étape 1), au moins deux images actualisées sont acquises avec des conditions d'acquisition différentes, notamment avec des orientations différentes de l'appareil d'acquisition, l'angle de l'axe optique de l'appareil d'acquisition avec le plan frontal du patient variant de préférence de plus de 20°, plus de 30°, plus de 45°, plus de 60°, voire plus de 90° entre les acquisitions des au moins deux images actualisées ;
- à l'étape 1), au moins une, de préférence chaque image actualisée est une photo ou une image extraite d'un film ;
- à l'étape 1), au moins une, de préférence chaque image actualisée est une image extraorale ;
- à l'étape 1), au moins une, de préférence chaque image actualisée est acquise avec un téléphone mobile, de préférence par le patient lui-même, optionnellement après mise en place d'un écarteur dentaire ;
- dans un mode de réalisation, à l'étape 1), au moins une, de préférence chaque image actualisée est acquise avec un téléphone mobile, de préférence par le patient lui-même, après fixation du téléphone mobile et d'un écarteur dentaire sur un support, puis mise en place de l'écarteur dentaire dans la bouche du patient ;
- le support présente la forme d'un boîtier débouchant exclusivement vers l'écarteur et vers le téléphone mobile ;
- toutes les images actualisées sont acquises dans une intervalle temporel d'une durée inférieure à 5 jours, de préférence inférieure à 1 jour, de préférence inférieure à 1 heure, de préférence inférieure à 10 minutes ;
- le patient envoie la ou les images actualisées à un ordinateur, de préférence au moyen du téléphone mobile ayant acquis l'image de gouttière ;
- l'ordinateur est configuré pour recevoir et traiter des images actualisées de plusieurs patients, de préférence de plus de 100, plus de 1 000, plus de 10 000 patients ;
- avant l'étape 2), un modèle intermédiaire de l'arcade dentaire est généré à partir de modèles intermédiaires du scénario de traitement, puis ajouté au scénario de traitement à titre de modèle intermédiaire ;
- à l'étape 2), la détermination du modèle intermédiaire actif est effectuée manuellement par un opérateur, de préférence par un professionnel de soins dentaires, de préférence encore un orthodontiste, de préférence à l'aide d'un ordinateur lui permettant de visualiser le scénario de traitement, ou est effectuée automatiquement, par un ordinateur, de préférence ledit ordinateur ayant reçu et traité des images actualisées de plusieurs patients, de préférence en comparant l'instant actualisé avec les instants intermédiaires des modèles intermédiaires du scénario de traitement ;
- à l'étape 2), le modèle intermédiaire actif est un modèle intermédiaire dont l'instant intermédiaire est écarté de l'instant actualisé par moins de 4 semaines, moins de 2 semaines, de préférence moins de 1 semaine ;
- à l'étape 2), le modèle intermédiaire actif est le modèle intermédiaire dont l'instant intermédiaire est le plus proche de l'instant actualisé ;
- à l'étape 3), la recherche des représentations de dents non conformes sur l'image actualisée d'analyse est effectuée manuellement par un opérateur, de préférence par un professionnel de soins dentaires, de préférence encore un orthodontiste, de préférence à l'aide d'un ordinateur lui permettant de visualiser la ou les images actualisées, ou, de préférence, est effectuée automatiquement, par un ordinateur, de préférence ledit ordinateur ayant reçu et traité des images actualisées de plusieurs patients, de préférence en mettant en œuvre un dispositif d'apprentissage profond, de préférence un réseau de neurones ;
- à l'étape 3), la représentation d'une dent sur l'image actualisée d'analyse est considérée comme non conforme avec le scénario de traitement si, lorsque l'image actualisée d'analyse, est superposée en registre à une vue du modèle intermédiaire actif compatible avec ladite l'image actualisée d'analyse, l'image actualisée d'analyse étant à la même échelle que la vue du modèle intermédiaire actif et à l'échelle réelle (les dimensions de la dent réelle étant identiques à celles de sa représentation), au moins un point de ladite représentation est écarté du point correspondant sur ladite vue, d'une distance supérieure à 1/10 mm, 3/10 mm, 5/10 mm ou 1 mm, et de préférence inférieure à 7 mm ou 5 mm ;
- à l'étape 4), l'identification des modèles de dent des dents non conformes dans le modèle intermédiaire actif est effectuée manuellement par un opérateur, de préférence par un professionnel de soins dentaires, de préférence encore un orthodontiste, de préférence à l'aide d'un ordinateur lui permettant de visualiser le modèle intermédiaire actif, ou est effectuée automatiquement, par un ordinateur, de préférence ledit ordinateur ayant reçu et traité des images actualisées de plusieurs patients, de préférence en mettant en œuvre un dispositif d'apprentissage profond, de préférence un réseau de neurones ;
- à l'étape 3), pour détecter une dent non conforme, on analyse l'image actualisée d'analyse sans recourir au modèle intermédiaire actif, auquel cas le modèle intermédiaire actif peut être déterminé après l'étape 3) ;
- alternativement, à l'étape 3), pour détecter une dent non conforme, on compare l'image actualisée d'analyse avec une vue du modèle intermédiaire actif, auquel cas le modèle intermédiaire actif doit être déterminé avant l'étape 3) ;
- à l'étape 3), pour détecter une dent non conforme,
   on recherche une position, une orientation et une calibration d'un appareil d'acquisition virtuel qui permettent au dit appareil d'acquisition virtuel d'avoir une vue sur le modèle intermédiaire actif la plus proche possible de l'image actualisée d'analyse, c'est-à-dire une vue du modèle intermédiaire actif qui présente un degré de compatibilité maximal (« *best fit* ») avec ladite image actualisée d'analyse ; puis on compare ladite vue et ladite image actualisée d'analyse, ou on compare une carte actualisée représentant une information discriminante de ladite image actualisée d'analyse, avec une carte de référence représentant ladite information discriminante sur ladite vue ;
- à l'étape 3), pour détecter une dent non conforme, l'image actualisée d'analyse étant une image de gouttière, on détermine, sur l'image actualisée d'analyse, un contour d'au moins une dent et un contour de la gouttière, puis on compare lesdits contours ;
- une dent est considérée comme non conforme si, sur l'image de gouttière, elle est décollée, au-delà d'un seuil, de la gouttière ;
- avant l'étape 5), on traite le modèle intermédiaire actif afin d'en améliorer la précision ;
- à l'étape 5), la déformation du modèle intermédiaire actif comprend des déplacements de modèles de dent dudit modèle intermédiaire actif, de préférence est constitué de tels déplacements ;
- à l'étape 5), le déplacement des modèles de dent est poursuivi jusqu' à ce que l'erreur de positionnement pour chaque modèle de dent, au regard de l'image actualisée de déformation soit inférieure à 1 mm, de préférence inférieure à 5/10 mm, de préférence inférieure à 3/10 mm, de préférence inférieure à 2/10 mm, de préférence inférieure à 1/10 mm ;
- à l'étape 5), le déplacement des modèles de dent des dents non conformes est effectué manuellement par un opérateur, de préférence par un professionnel de soins dentaires, de préférence encore un orthodontiste, de préférence à l'aide d'un ordinateur lui permettant de visualiser le modèle intermédiaire actif, ou est effectué automatiquement, par un ordinateur, de préférence ledit ordinateur ayant reçu et traité des images actualisées de plusieurs patients, de préférence en mettant en œuvre un dispositif d'apprentissage profond, de préférence un réseau de neurones ou une méthode d'optimisation, de préférence une méthode d'optimisation métaheuristique ;
- à l'étape 5), le déplacement des modèles de dent des dents non conformes est limité par les modèles de dent des dents conformes, maintenues immobiles ;
- à l'étape 5), le déplacement des modèles de dent des dents non conformes est un processus itératif selon lequel, à chaque itération,
   - un ou plusieurs desdits modèles de dents des dents non conformes sont déplacés de manière à obtenir un modèle de l'arcade à tester, puis
   - le modèle à tester est testé par évaluation d'un degré de compatibilité entre ledit modèle et l'image actualisée de déformation, en particulier une l'image de dentition nue ;
le modèle actualisé étant, parmi l'ensemble des modèles testés, celui qui fournit le degré de compatibilité le plus élevé ;
- avant ledit processus itératif, on recherche une position, une orientation et une calibration d'un appareil d'acquisition virtuel permettant d'observer le modèle intermédiaire actif selon une vue dans laquelle la représentation des dents conformes est superposable en registre avec la représentation desdites dents conformes sur l'image actualisée de déformation, ou « conditions d'acquisition virtuelles cadrées », puis,
   pendant ledit processus itératif, à chaque itération, le degré de compatibilité entre le modèle en cours de test et l'image actualisée de déformation est évalué en comparant l'image actualisée de déformation et une vue du modèle en cours de test obtenue dans lesdites conditions d'acquisition virtuelles cadrées ;
- le cycle des itérations est interrompu si le nombre d'itérations dépasse un nombre prédéterminé ou si la valeur du degré de compatibilité dépasse un seuil prédéterminé ;
- à l'étape 5), lors de ladite déformation du modèle intermédiaire actif, les seuls modèles de dent déplacés sont des modèles de dent de dents non conformes ;
- à l'étape 3) ou 4), de préférence à la fin de l'étape 4), on mesure la non-conformité de la ou des dents non conformes, en particulier le déplacement de la ou des dents décollées, à partir d'au moins une image actualisée, de préférence par comparaison de ladite image actualisée d'analyse avec le modèle intermédiaire actif, puis à l'étape 5), on déplace le ou les modèles de dent des dents non conformes en fonction de ladite mesure, de préférence jusqu'à ce que l'erreur de positionnement pour chaque modèle de dent, au regard de l'image actualisée de déformation, soit inférieure à 1 mm, de préférence inférieure à 5/10 mm, de préférence inférieure à 3/10 mm, de préférence inférieure à 2/10 mm, de préférence inférieure à 1/10 mm ;
- à l'étape 5), la déformation du modèle intermédiaire actif comporte un déplacement du ou des modèles de dent des dents non conformes, l'amplitude et/ou la direction dudit déplacement étant déterminée(s) en fonction d'une mesure de la non-conformité de la dite ou desdites dents non conforme(s), ladite mesure étant réalisée à partir d'au moins une image actualisée, en particulier l'image de gouttière, de préférence par comparaison de ladite image actualisée avec le modèle intermédiaire actif.

L'invention concerne également un procédé de fabrication d'une gouttière orthodontique, ledit procédé comportant les étapes 1) à 5), puis les étapes suivantes
6) conception, à partir du modèle actualisé et d'un modèle final représentant l'arcade dans une configuration finale théorique, d'une gouttière « actualisée » adaptée pour, dans la position de service, modifier l'arcade dentaire depuis une configuration réelle à l'instant actualisé vers ladite configuration finale théorique,
7) fabrication de la gouttière actualisée et remise de la gouttière actualisée au patient.

La configuration finale théorique, prévue pour l'arcade à un instant final postérieur au dernier instant intermédiaire, est typiquement celle de l'arcade visée en fin de traitement.

Un procédé selon l'invention peut être partiellement mis en œuvre par ordinateur, en particulier pour les étapes de modification d'un modèle, de calcul ou d'exploration d'un modèle, notamment pour rechercher des conditions d'acquisition virtuelles cadrées, ou pour analyser des images ou des cartes, par exemple pour rechercher des contours.

L'invention concerne également :
- un programme d'ordinateur, comprenant des instructions de code de programme pour l'exécution d'une ou plusieurs, de préférence toutes les étapes 2), 3), 4), 5), voire l'étape 6), lorsque ledit programme est exécuté par un ordinateur,
- un support informatique sur lequel est enregistré un tel programme, par exemple une mémoire ou un CD-ROM, et
- un ordinateur dans lequel est chargé un tel programme.

L'invention concerne aussi un système comportant :
- un appareil personnel, de préférence un téléphone mobile, configuré pour acquérir la ou les images actualisées à l'étape 1),
- un ordinateur chargé avec un programme comprenant des instructions de code de programme pour l'exécution d'une ou plusieurs, de préférence toutes les étapes 2 ) à 5) et de préférence l'étape 6), lorsque ledit programme est exécuté par un ordinateur, c'est-à-dire « configuré pour » exécuter ces étapes ;
- optionnellement, un ordinateur chargé avec un programme configuré pour la fabrication des gouttières à l'étape 7).

### Définitions

Par « patient » ou « utilisateur », on entend toute personne pour laquelle un procédé selon l'invention est mis en œuvre, que cette personne soit malade ou non.

Par « dentition », on entend un ensemble de dents d'une arcade dentaire.

Par « professionnel de soins dentaires », on entend toute personne qualifiée pour prodiguer des soins dentaires, ce qui inclut en particulier un orthodontiste et un dentiste.

On appelle « gouttière active » la gouttière utilisée par le patient à un instant du traitement. Dans un traitement avec plusieurs gouttières, il est prévu que chaque gouttière soit successivement active.

Un scanner 3D, ou « scanner », est un appareil permettant d'obtenir un modèle d'une arcade dentaire.

La « position de service » est la position de la gouttière lorsqu'elle a été fixée sur l'arcade afin de traiter cette arcade. Classiquement, la fixation est désactivable par le patient, par une simple traction sur la gouttière.

Quand une gouttière est fixée sur une arcade dans la position de service, on appelle « dents décollées » et « dents non décollées » les dents qui ne prennent pas correctement appui sur la gouttière (situation appelée « *unseat* ») et qui prennent correctement appui sur la gouttière, respectivement. Un orthodontiste sait parfaitement distinguer les dents décollées des dents non décollées. Cette distinction peut être également effectuée par un ordinateur, en particulier en évaluant la distance entre une dent et le fond de la goulotte de la gouttière qui y est fixée.

De manière plus générale, une dent est dite « conforme » ou « non conforme » lorsque qu'à un instant actualisé, elle est ou n'est pas, respectivement, dans la position prévue dans le scénario de traitement. Une dent décollée est un exemple de dent non conforme.

Un « instant actualisé » est un instant au cours duquel les images actualisées sont acquises. La durée de cet instant est suffisamment courte pour que la configuration des dents n'évolue sensiblement pas pendant cette durée.

Une configuration d'une arcade est dite « réelle » lorsqu'elle est celle de l'arcade du patient dans la réalité. Une configuration d'une arcade est dite « théorique » lorsqu'elle est celle de l'arcade du patient telle que « simulée » ou « prévue » à un instant futur.

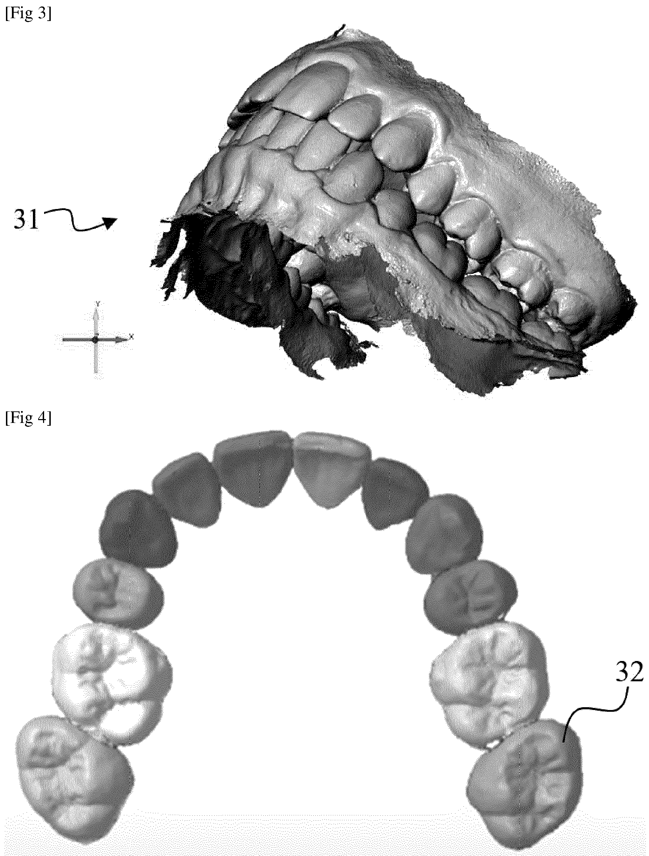

Par « modèle », on entend un modèle tridimensionnel numérique. Un modèle est constitué d'un ensemble de voxels. Un « modèle d'une arcade » est un modèle représentant au moins une partie d'une arcade dentaire, de préférence au moins 2, de préférence au moins 3, de préférence au moins 4 dents. La figure 3 montre un exemple de vue d'un modèle d'arcade.

Un « modèle de dent » est un modèle numérique tridimensionnel d'une dent de l'arcade d'un patient. Un modèle d'une arcade peut être découpé de manière à définir pour au moins une partie des dents, de préférence pour toutes les dents représentées dans le modèle de l'arcade, des modèles de dent. Les modèles de dent sont donc des modèles au sein du modèle de l'arcade. La figure 4 montre un exemple de vue d'un modèle d'arcade découpé. Il existe des outils informatiques pour manipuler les modèles de dent d'un modèle d'arcade. Ces outils permettent d'imposer des contraintes, en particulier pour limiter les déplacements des modèles de dent à des déplacements réalistes, par exemple pour empêcher que des modèles de dents adjacents ne s'interpénètrent.

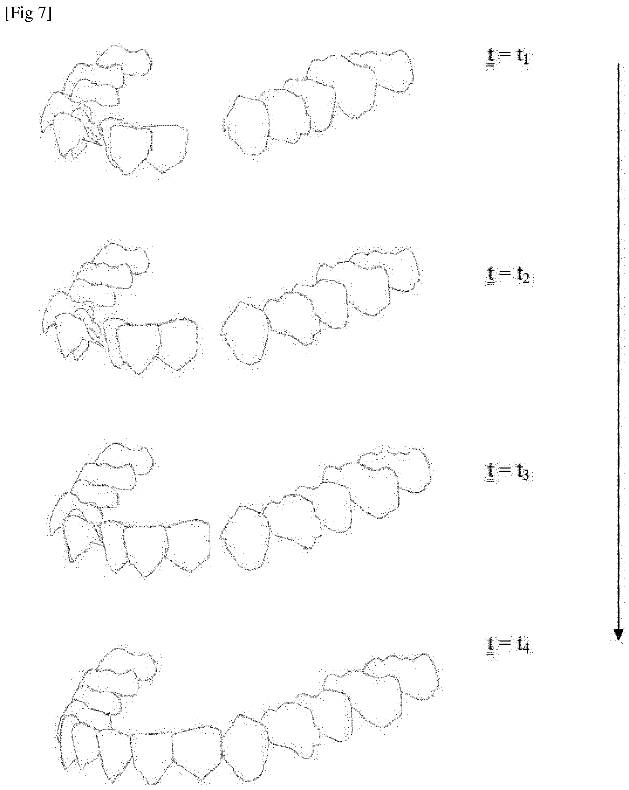

Un « scénario » est une suite de modèles d'une arcade qui représentent des configurations d'arcade successives. En particulier, un « scénario de traitement », ou « plan de traitement », comporte des modèles qui représentent des configurations d'une arcade à différents instants de son traitement. Ces instants sont classiquement l'instant initial, avant le début du traitement, des instants intermédiaires pendant le traitement, et l'instant final, en fin de traitement. Chaque modèle d'un scénario représentant l'arcade dans sa configuration prévue à un instant intermédiaire est appelé « modèle intermédiaire ». La figure 7 illustre un exemple de scénario de traitement.

Les configurations de l'arcade aux instants intermédiaires et final sont théoriques car elles résultent d'une simulation pour un instant futur. Elles sont donc anticipées, ou « prévues », et peuvent donc différer de la réalité à l'instant intermédiaire. La visualisation des modèles d'un scénario, de manière chronologique, permet de simuler l'effet du traitement de l'arcade.

Un exemple de logiciel permettant de manipuler les modèles de dent et créer un scénario de traitement est le programme Treat, décrit sur la page https://en.wikipedia.org/wiki/Clear_aligners#cite_note-invisalignsystem-10. US5975893A décrit également la création d'un scénario de traitement.

Par "image", on entend une image en deux dimensions, comme une photographie ou une image extraite d'un film. Une image est formée de pixels.

Les « conditions d'acquisition » précisent la position dans l'espace, l'orientation dans l'espace et la calibration, par exemple les valeurs de l'ouverture de diaphragme et/ou du temps d'exposition et/ou de la distance focale et/ou de la sensibilité,
- d'un appareil d'acquisition d'images réel, relativement à une arcade dentaire du patient (conditions d'acquisition réelles) ou
- d'un appareil d'acquisition d'images virtuel, relativement à un modèle d'une arcade dentaire du patient (conditions d'acquisition virtuelles).

La « calibration » d'un appareil d'acquisition est constituée par l'ensemble des valeurs des paramètres de calibration. Un paramètre de calibration est un paramètre intrinsèque à l'appareil d'acquisition (à la différence de sa position et de son orientation) dont la valeur influence l'image acquise. Par exemple, l'ouverture de diaphragme est un paramètre de calibration qui modifie la profondeur de champ. Le temps d'exposition est un paramètre de calibration qui modifie la luminosité (ou « l'exposition ») de l'image. La distance focale est un paramètre de calibration qui modifie l'angle de vue, c'est-à-dire le degré de « zoom ». La « sensibilité » est un paramètre de calibration qui modifie la réaction du capteur d'un appareil d'acquisition numérique à la lumière incidente.

De préférence, les paramètres de calibration sont choisis dans le groupe formé par l'ouverture de diaphragme, le temps d'exposition, la distance focale et la sensibilité.

Une observation d'un modèle, dans des conditions d'acquisition virtuelles déterminées, en particulier avec une calibration d'appareil d'acquisition virtuel, selon un angle et à une distance déterminés, est appelée une « vue ».

Par « image d'une arcade », « vue d'une arcade », « représentation d'une arcade », « scan d'une arcade », ou « modèle d'une arcade », on entend une image, une vue, une représentation, un scan ou un modèle de tout ou partie de ladite arcade dentaire.

Un modèle d'une arcade dentaire d'un patient est « compatible » avec une image lorsqu'il existe une vue de ce modèle qui correspond à ladite image, c'est-à-dire telle que les représentations des dents sur la vue sont positionnées, relativement les unes aux autres, comme les représentations des dents sur l'image. Les contours des modèles de dents représentés sur la vue sont donc sensiblement superposables en registre aux contours des représentations desdites dents sur l'image.

Cette vue du modèle peut être également qualifiée de « compatible », ou « superposable en registre », avec ladite image.

Les dispositifs d'apprentissage profond, dits algorithmes de *« deep learning »,* sont bien connus de l'homme de l'art. Ils comprennent les « réseaux de neurones » ou « réseaux neuronaux artificiels ».

L'homme de l'art sait choisir un réseau de neurones, en fonction de la tâche à effectuer. Notamment, un réseau de neurones peut être en particulier choisi parmi :
- les réseaux spécialisés dans la classification d'images, appelés « CNN » (« Convolutional neural network »), par exemple
   - AlexNet (2012)
   - ZF Net (2013)
   - VGG Net (2014)
   - GoogleNet (2015)
   - Microsoft ResNet (2015)
   - Caffe: BAIR Reference CaffeNet, BAIR AlexNet
   - Torch :VGG_CNN_S,VGG_CNN_M,VGG_CNN_M_2048,VGG_CNN_M_1 024,VGG_CNN_M_128,VGG_CNN_F,VGG ILSVRC-2014 16-layer,VGG ILSVRC-2014 19-layer,Network-in-Network (Imagenet & CIFAR-10)
   - Google : Inception (V3, V4)
- les réseaux spécialisés dans la localisation, et détection d'objets dans une image, les Object Detection Network, par exemple:
   - R-CNN (2013)
   - SSD (Single Shot MultiBox Detector : Object Detection network), Faster R-CNN (Faster Region-based Convolutional Network method : Object Detection network)
   - Faster R-CNN (2015)
   - SSD (2015)
   - RCF (Richer Convolutional Features for Edge Detection) (2017)
- les réseaux spécialisés dans la génération d'images, par exemple :
   - Cycle-Consistent Adversarial Networks (2017)
   - Augmented CycleGAN (2018)
   - Deep Photo Style Transfer (2017)
   - FastPhotoStyle (2018)
   - pix2pix (2017)
   - Style-Based Generator Architecture for GANs (2018)
   - SRGAN (2018).

La liste ci-dessus n'est pas limitative.

L'entrainement d'un réseau de neurones consiste à le confronter à une base d'apprentissage contenant des informations sur les deux types d'objet que le réseau de neurones doit apprendre à faire « correspondre », c'est-à-dire à connecter l'un à l'autre.

L'entrainement peut se faire à partir d'une base d'apprentissage constituée d'enregistrements comportant chacun un premier objet d'un premier type et un deuxième objet correspondant, d'un deuxième type.

Alternativement, l'entrainement peut se faire à partir d'une base d'apprentissage constituée d'enregistrements comportant chacun soit un premier objet d'un premier type, soit un deuxième objet d'un deuxième type, chaque enregistrement comportant cependant l'information relative au type d'objet qu'il contient. De telles techniques d'entrainement sont par exemple décrites dans l'article de Zhu, Jun-Yan, et al. "Unpaired image-to-image translation using cycle-consistent adversarial networks*."*

L'entrainement du réseau de neurones avec ces enregistrements lui apprend à fournir, à partir d'un objet quelconque du premier type, un objet correspondant du deuxième type.

La qualité de l'analyse réalisée par le réseau de neurones dépend directement du nombre d'enregistrements de la base d'apprentissage. De préférence, la base d'apprentissage comporte plus de 10 000 enregistrements.

Pour évaluer « l'erreur de positionnement » d'un modèle de dent, on mesure la distance, lorsque l'image actualisée de déformation, à l'échelle 1:1, est superposée en registre à une vue du modèle intermédiaire actif compatible avec ladite l'image actualisée de déformation, à l'échelle 1:1, entre chaque point de la représentation, sur l'image actualisée de déformation, de la dent modélisée par le modèle de dent et le point correspondant sur ladite vue. L'erreur de positionnement est la plus grande de ces distances en considérant l'ensemble des points de ladite représentation ayant un point correspondant sur ladite vue. A l'échelle 1 :1 signifie que la représentation des dents est à l'échelle réelle, l'image actualisée de déformation et la vue du modèle intermédiaire actif représentant alors la dent avec ses dimensions réelles.

« Comprendre », « comporter » ou « présenter » doivent être interprétés de manière large, non limitative, sauf indication contraire.

### Brève description des figures

D'autres caractéristiques et avantages de l'invention apparaîtront encore à la lecture de la description détaillée qui va suivre et à l'examen du dessin annexé dans lequel :
- [Fig 1] représente une vue en perspective d'une gouttière orthodontique ;
- [Fig 2] représente une vue de dessus de la gouttière orthodontique de la figure 1 ;
- [Fig 3] représente un exemple de modèle initial (un modèle intermédiaire, un modèle final et un modèle actualisé peuvent présenter une forme similaire) ;
- [Fig 4] représente un exemple de modèle dont les modèles de dent ont été découpés (seuls les modèles de dent sont représentés) ;
- [Fig 5] représente schématiquement une arcade de support portant une gouttière orthodontique ;
- [Fig 6] représente un système adapté à la mise en œuvre d'un procédé selon l'invention ;
- [Fig 7] représente un scénario de traitement ;
- [Fig 8] illustre schématiquement les procédés selon l'invention ;
- [Fig 9] représente un exemple d'image de gouttière ;
- [Fig 10] illustre schématiquement l'acquisition d'une image de gouttière et/ou d'une image de dentition nue ;
- [Fig 11] illustre schématiquement un écarteur pouvant être utilisé avec le kit d'acquisition représenté sur la figure 10 ;
- [Fig 12] illustre schématiquement un premier procédé pour détecter un décollement sur une image ;
- [Fig 13] illustre schématiquement un deuxième procédé pour détecter un décollement sur une image.

### Description détaillée

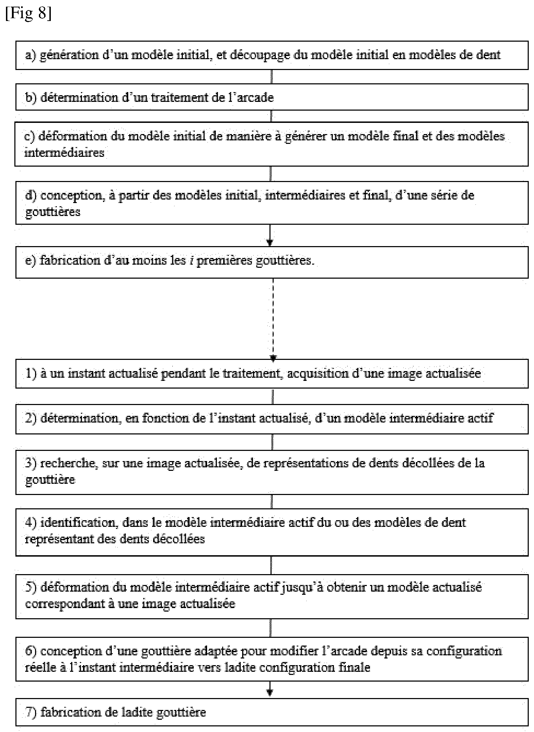

Dans un mode de réalisation, un procédé selon l'invention comporte, avant la mise en œuvre des étapes 1) à 5), les étapes suivantes (figure 8):
à un instant initial *t₁,* typiquement en début de traitement,
a) génération d'un modèle numérique tridimensionnel d'une arcade dentaire d'un patient, dit « modèle initial », ladite arcade étant dans une configuration initiale réelle, et découpage du modèle initial en modèles de dent ;
b) détermination d'un traitement de l'arcade pour la modifier depuis ladite configuration initiale, par l'intermédiaire de configurations intermédiaires théoriques à des instants intermédiaires respectifs tₙ, *n* étant compris entre 2 et N, jusqu'à une configuration finale théorique, à un instant final, typiquement en fin de traitement ;
c) déformation du modèle initial de manière à générer un scénario de traitement comportant un modèle final et des modèles intermédiaires représentant l'arcade dentaire dans la configuration finale et dans les configurations intermédiaires, respectivement ;
d) conception, à partir des modèles initial, intermédiaires et final, d'une série de gouttières ;
e) fabrication d'une ou plusieurs des gouttières et remise de ces gouttières au patient.

Dans un mode de réalisation de l'invention, le procédé comporte encore, au cours du traitement, les étapes 1) à 5) d'un procédé de génération d'un modèle actualisé selon l'invention, puis de préférence les étapes suivantes :
6) conception, à partir du modèle actualisé et du modèle final, d'une gouttière actualisée conformée pour modifier l'arcade depuis sa configuration réelle à l'instant actualisé vers ladite configuration finale ;
7) fabrication de la gouttière actualisée et remise de la gouttière actualisée au patient.

**A l'étape** a), le modèle initial est réalisé à un instant initial *t₁* qui précède le début d'un traitement orthodontique au moyen de gouttières orthodontiques, de préférence moins de 6 mois, de préférence moins de 3 mois ou moins d'un mois ou moins de 2 semaines avant le début du traitement.

Le modèle initial peut être préparé à partir de mesures effectuées sur les dents du patient ou sur un modèle physique de ses dents, par exemple un modèle en plâtre.

Le modèle initial est de préférence créé au moyen d'un appareil professionnel, par exemple au moyen d'un scanner 3D, de préférence mis en œuvre par un professionnel de soins dentaires, par exemple par un orthodontiste ou un laboratoire d'orthodontie. Dans un cabinet d'orthodontie, le patient ou le modèle physique de ses dents peuvent être avantageusement disposés dans une position précise et l'appareil professionnel peut être perfectionné. Il en résulte un modèle initial très précis. Le modèle initial fournit de préférence une information sur le positionnement des dents avec une erreur inférieure à 5/10 mm, de préférence inférieure à 3/10 mm, de préférence inférieure à 1/10 mm.

Le modèle initial est par exemple du type .stl ou .Obj, .DXF 3D, IGES, STEP, VDA, ou Nuages de points. Avantageusement, un tel modèle, dit « 3D », peut être observé selon un angle quelconque.

Le modèle initial est classiquement observable et manipulable au moyen d'un ordinateur. Le modèle initial est ensuite découpé pour définir des modèles de dent.

Le découpage d'un modèle tridimensionnel en modèles de dent est une opération classique par laquelle le modèle est découpé afin de délimiter la représentation d'une ou plusieurs des dents dans le modèle initial. D'autres éléments de l'arcade, par exemple la gencive, peuvent être également modélisés.

Le modèle initial peut être découpé manuellement par un opérateur, à l'aide d'un ordinateur, ou être découpé automatiquement, par un ordinateur, de préférence en mettant en œuvre un dispositif d'apprentissage profond, de préférence un réseau de neurones.

En particulier, les modèles de dents peuvent être définis comme décrit, par exemple, dans la demande internationale PCT/EP2015/074896.

La figure 4 représente un exemple d'un modèle initial dont les modèles de dent 32 ont été découpés (seuls les modèles de dent sont représentés ; ils sont d'aspects différents afin d'être plus facilement identifiables).

Après découpage, les modèles de dent peuvent être déplacés. Avec un ordinateur, le modèle initial découpé peut ainsi ensuite déformé, par déplacement des modèles de dent, sans modification des modèles de dent, pour simuler un déplacement des dents depuis l'instant initial jusqu'à un instant final auquel les dents sont dans une configuration finale, l'instant final pouvant en particulier marquer la fin du traitement.

**A l'étape** b), on détermine le traitement selon lequel une ou plusieurs dents vont être déplacées, depuis la configuration initiale jusqu'à la configuration finale, en passant par des configurations intermédiaires.

L'ensemble des modèles de l'arcade permettant de visualiser les étapes du traitement constitue le scénario de traitement. Un ordinateur est utilisé pour visualiser le scénario de traitement et enregistrer le modèle initial déformé pour simuler la configuration de l'arcade aux différents instants intermédiaires.

Classiquement, il existe plusieurs scénarii potentiels possibles pour un même traitement. Dans un mode de réalisation, un ordinateur détermine les scénarii potentiels et sélectionne le scénario de traitement parmi eux. Dans un autre mode de réalisation, un ordinateur détermine les scénarii potentiels, les présente à un professionnel de soins dentaires, et ce dernier sélectionne le scénario de traitement parmi eux. Dans un autre mode de réalisation, préféré, un professionnel de soins dentaires, de préférence un orthodontiste, détermine les scénarii potentiels, et sélectionne le scénario de traitement parmi eux. Un ordinateur lui permet avantageusement de visualiser une simulation de l'effet, sur l'arcade, d'un scénario potentiel.

**A l'étape** c), on déforme le modèle initial pour générer un modèle final représentant l'arcade dans la configuration finale théorique et les modèles intermédiaires marquant les étapes entre le modèle initial et le modèle final.

La déformation peut être déterminée, en fonction d'un traitement orthodontique, par un professionnel de soins dentaires, de préférence un orthodontiste, de préférence à l'aide d'un ordinateur lui permettant de visualiser l'effet sur l'arcade de traitements envisagés, ou être déterminée automatiquement, par un ordinateur, de préférence en mettant en œuvre un dispositif d'apprentissage profond, de préférence un réseau de neurones.

De préférence, les étapes b) et c) sont simultanées. La détermination du scénario de traitement résulte en effet d'une ou plusieurs simulations réalisées par déformation du modèle initial jusqu'à la configuration du modèle final, en déplaçant les modèles de dent. Quand le traitement est retenu, il suffit, pour générer les modèles intermédiaires, de simuler ce traitement et, aux instants intermédiaires, de sauvegarder le modèle initial déformé.

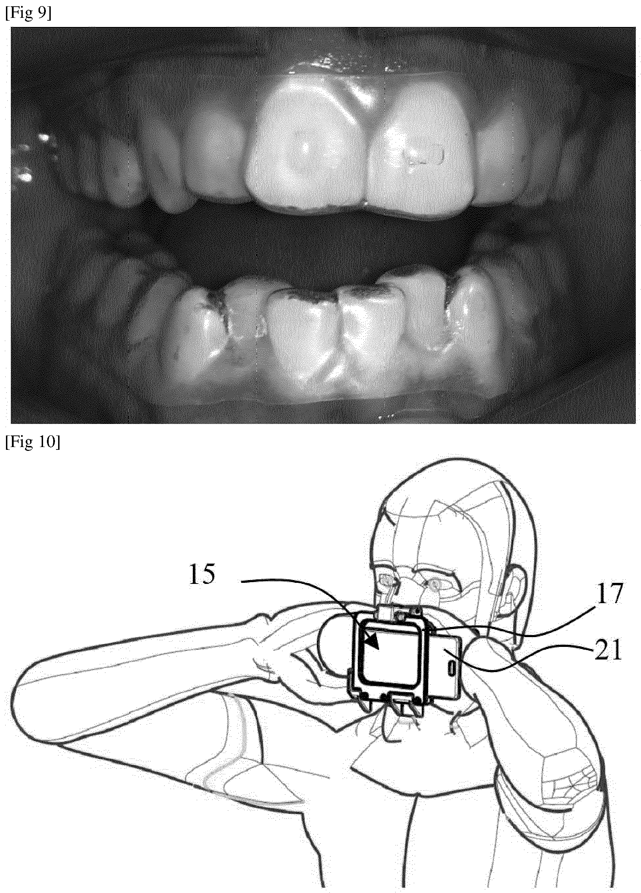

La figure 9 représente un exemple de scénario de traitement comportant un modèle initial, deux modèles intermédiaires et un modèle final.

**A l'étape d),** on conçoit une série de gouttières pour déformer l'arcade, par déplacement des dents, suivant le scénario de traitement.

**A l'étape e),** on fabrique une ou plusieurs des premières gouttières de la série. Classiquement, on fabrique toutes les gouttières de la série. Ces gouttières sont remises au patient pour qu'il commence son traitement.

Des procédés comportant des étapes a) à e) sont bien connus et couramment utilisés pour la conception et la fabrication de séries de gouttières orthodontiques.

Classiquement, le patient est suivi par son orthodontiste. Comme expliqué en introduction, l'orthodontiste vérifie régulièrement l'adéquation des gouttières et, en cas de non-conformité au traitement, notamment en cas de décollement, génère un nouveau modèle de l'arcade avec un scanner, puis reprend des étapes b) à e) en remplaçant le modèle initial par ce nouveau modèle, de manière à réaliser une nouvelle série de gouttières destinée à la suite du traitement.

Selon l'invention, le procédé comporte, pendant le traitement, les étapes 1) à 5), de préférence 1) à 7).

**A l'étape 1),** à un instant actualisé, on acquiert une image actualisée dite « d'analyse », permettant de détecter une non-conformité, et en particulier un décollement d'une dent par rapport à la gouttière portée à l'instant actualisé.

L'instant actualisé peut être par exemple postérieur de plus de 2, plus de 4, plus de 8 ou plus de 12 semaines de l'instant initial.

De préférence, avant l'instant actualisé, par exemple moins de 2 semaines avant l'instant actualisé, au moins un rappel informant le patient de la nécessité de prendre une image actualisée d'analyse est adressé au patient. Ce rappel peut être sous forme papier ou, de préférence, sous forme électronique, par exemple sous la forme d'un courriel, d'une alerte automatique d'un applicatif spécialisé mobile ou d'un SMS. Un tel rappel peut être envoyé par le cabinet ou le laboratoire d'orthodontie ou par le dentiste ou par un applicatif spécialisé sur le téléphone mobile du patient, par exemple.

L'image actualisée d'analyse est prise avec un appareil d'acquisition d'images, de préférence un appareil d'acquisition personnel, de préférence un téléphone mobile, un appareil photo dit « connecté », une montre dite « intelligente », ou « smartwatch », une tablette ou un ordinateur personnel, fixe ou portable, comportant un système d'acquisition d'images, comme une webcam ou un appareil photo.

L'image actualisée d'analyse est de préférence extra-orale.

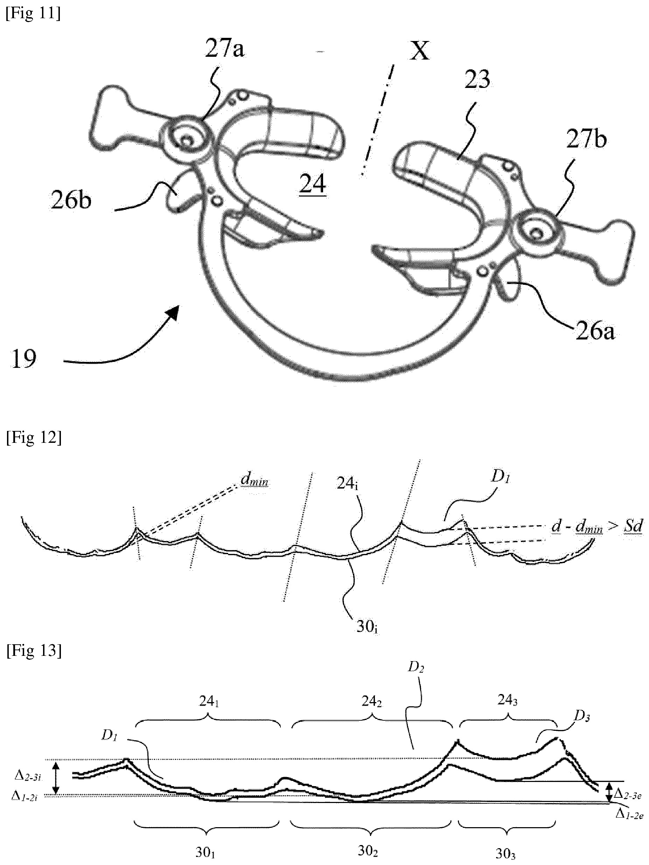

Dans un mode de réalisation, on utilise un kit de prise de photos 15, comme illustré sur les figures 10 et 11. De préférence, un tel kit comporte un support 17, un écarteur dentaire 19, et un appareil d'acquisition d'images, de préférence un téléphone mobile 21. L'écarteur dentaire 19 et l'appareil d'acquisition, de préférence un téléphone mobile, sont de préférence fixés de manière amovible sur le support 17.

L'écarteur 19 peut présenter les caractéristiques des écarteurs conventionnels.

Comme représenté sur la figure 11 (où il a été séparé du support), il comporte de préférence un rebord 23 s'étendant autour d'une ouverture d'écarteur d'axe X et agencé de manière que les lèvres du patient puissent y reposer en laissant apparaître les dents du patient à travers ladite ouverture d'écarteur.

L'écarteur 14 peut être fixé sur le support par une ou plusieurs attaches 27a et 27b, par exemple des attaches magnétiques.

De préférence, l'écarteur comporte des oreilles d'écartement des joues 26a et 26b afin que l'appareil d'acquisition, fixé sur le support, puisse acquérir, à travers l'ouverture d'écarteur, des photos de faces vestibulaires de dents disposée au fond de la bouche, comme des molaires.

De préférence, le support présente la forme d'un boîtier débouchant exclusivement vers ouverture de l'écarteur et vers le téléphone mobile. Le téléphone mobile observe ainsi l'arcade dentaire du patient à travers le boîtier. Avantageusement, le support permet de prédéterminer la position du téléphone mobile par rapport à l'arcade.

L'acquisition est de préférence réalisée par le patient ou un proche du patient, mais peut être réalisée par toute autre personne, notamment un dentiste ou un orthodontiste, de préférence sans imposer un positionnement précis de l'appareil d'acquisition d'images par rapport aux dents.

De préférence, l'image actualisée d'analyse est une photographie ou est une image extraite d'un film. Elle est de préférence en couleurs, de préférence en couleurs réelles. De préférence encore, l'image actualisée d'analyse est une photographie représentant une arcade dentaire réelle comme le perçoit l'oeil humain, à la différence d'un cliché tomographique ou d'un panoramique acquis par rayons X.

De préférence, l'image actualisée d'analyse est ensuite envoyée à un ordinateur centralisé, de préférence au moyen du téléphone mobile ayant acquis l'image actualisée d'analyse.

De préférence, un applicatif spécialisé est chargé dans le téléphone mobile pour guider, de préférence oralement et/ou visuellement, le patient dans les différentes opérations à réaliser et transmettre l'image actualisée d'analyse.

Dans un mode de réalisation, l'image actualisée d'analyse est une image de gouttière, ce qui permet avantageusement de détecter les non conformités, et en particulier les décollements, par analyse de cette seule image. Cette détection peut également résulter d'une comparaison de cette image avec le modèle intermédiaire actif.

Dans un mode de réalisation, l'image actualisée d'analyse est une image de dentition nue, ce qui permet avantageusement de détecter les non conformités avec une bonne précision, et notamment sans être gêné par la représentation de la gouttière, mais nécessite une comparaison de cette image avec le modèle intermédiaire actif.

De préférence, à l'étape 1), on acquiert une image de gouttière et une image de dentition nue, de manière à bénéficier de deux analyses complémentaires.

De préférence, à l'étape 1), on acquiert au moins une image de dentition nue, pour servir d'image actualisée de déformation pour l'étape 5).

**A l'étape 2),** on détermine, de préférence par ordinateur, en fonction de l'instant actualisé, un dit modèle intermédiaire, ou « modèle intermédiaire actif ». L'étape 2) peut être postérieure à l'étape 3) si, à l'étape 3), pour détecter une dent non conforme, on analyse l'image actualisée d'analyse sans recourir au modèle intermédiaire actif.

On choisit dans le scénario de traitement, de préférence par ordinateur, le modèle intermédiaire qui, suivant ce scénario, devrait représenter au mieux l'arcade dentaire à l'instant actualisé. Dans l'hypothèse où le traitement se déroule conformément au scénario de traitement, le modèle intermédiaire dont l'instant intermédiaire est le plus proche de l'instant actualisé peut être choisi. Ce modèle intermédiaire est dit « actif ».

De préférence, le modèle intermédiaire actif est un modèle intermédiaire dont l'instant intermédiaire est proche de l'instant actualisé, de préférence écarté de l'instant actualisé par moins de 4 semaines, moins de 2 semaines, de préférence moins de 1 semaine. De préférence, l'instant intermédiaire du modèle intermédiaire actif est antérieur à l'instant actualisé.

Dans un mode de réalisation préféré, le modèle intermédiaire actif n'est pas modifié avant l'étape 5). L'évaluation des déplacements des dents s'effectue donc par comparaison de l'image actualisée d'analyse et d'un modèle intermédiaire conçu à l'instant initial.

Dans un mode de réalisation préféré, le modèle intermédiaire actif peut être grossièrement corrigé, par exemple manuellement, pour tenir compte de modifications de l'arcade dentaire du patient, entre l'instant initial et l'instant actualisé, qui ne résultent pas d'une dérive dans le déroulement du traitement, par exemple pour retirer un modèle de dent d'une dent qui est tombée ou a été extraite.

**A l'étape 3),** on recherche les représentations, sur l'image actualisée d'analyse, de dents non conformes avec le scénario de traitement, et en particulier les représentations de dents qui sont décollées de la gouttière.

De préférence, l'ordinateur centralisé est programmé pour détecter automatiquement les dents non conformes et identifier ces dents.

### Détection d'une non-conformité avec le modèle intermédiaire actif

L'ordinateur peut en particulier utiliser une image actualisée d'analyse sous la forme d'une image de dentition nue, et la comparer au modèle intermédiaire actif.

De préférence, on recherche une position, une orientation et une calibration d'un appareil d'acquisition virtuel, collectivement appelées « conditions d'acquisition virtuelles », qui correspondent au mieux (*« best fit »*) aux conditions d'acquisition réelles de l'image actualisée d'analyse.

On compare ensuite la vue dans lesdites conditions d'acquisition virtuelles et l'image actualisée d'analyse.

La comparaison de ladite vue et de l'image actualisée d'analyse permet de détecter des dents non conformes, c'est-à-dire non seulement des dents décollées, mais aussi des dents non décollées, mais dont la position ne correspond pas au scénario de traitement.

La comparaison de la vue et de l'image actualisée d'analyse peut résulter de la comparaison de cartes correspondantes relatives à une information discriminante, par exemple représentant les contours des dents. La procédure de comparaison décrite ci-après pour comparer une carte de test et une carte actualisée peut être utilisée.

La recherche desdites conditions d'acquisition virtuelles et ladite comparaison peuvent en particulier être effectuées suivant l'enseignement de PCT/EP2015/074896.

Dans un mode de réalisation préféré, on considère que la représentation d'une dent sur l'image actualisée d'analyse est non conforme avec le scénario de traitement si au moins un point de cette représentation, à l'échelle 1:1, est écarté du point correspondant (c'est-à-dire représentant le même point de la dent) sur ladite vue, à l'échelle 1:1, d'une distance supérieure à 1/10 mm, 3/10 mm ou 5/10 mm et de préférence inférieure à 7 mm, ou 5 mm.

La distance peut être également mesurée en pixels, ce qui avantageusement évite de devoir établir une échelle.

La non-conformité est donc avantageusement une non-conformité permettant de détecter une dérive dans l'exécution du traitement. En particulier, une distance trop élevée est considérée comme ne relevant pas d'une dérive du traitement, mais d'une anomalie, par exemple parce que la dent a été mal déterminée, par exemple parce qu'elle est masquée sur l'image actualisée d'analyse.

### Détection d'un décollement sur une image de gouttière, sans recours au modèle intermédiaire actif

Pour détecter les décollements par ordinateur, on peut analyser une image actualisée d'analyse sous la forme d'une image de gouttière, en particulier pour déterminer le contour du fond de la goulotte de la gouttière et le contour des extrémités libres des dents.

L'homme de l'art sait comment traiter une image ou une vue pour isoler un contour. Ce traitement comporte par exemple l'application de masques ou de filtres bien connus, fournis avec des logiciels de traitement d'images. De tels traitements permettent par exemple de détecter les régions de fort contraste.

Ces traitements comprennent notamment une ou plusieurs des méthodes connues et préférées suivantes :
- application d'un filtre Canny, notamment pour rechercher des contours en utilisant l'algorithme de Canny ;
- application d'un filtre Sobel, notamment pour calculer des dérivées au moyen de l'opérateur étendu de Sobel ;
- application d'un filtre de Laplace, pour calculer le laplacien d'une image ;
- détection de tâches sur une image (« Blobdetector ») ;
- application d'un seuil (« Threshold ») pour appliquer un seuil fixe à chaque élément d'un vecteur ;
- redimensionnement, en utilisant des relations entre les zones de pixels (« Resize(Area) ») ou des interpolations bi-cubiques sur l'environnement des pixels ;
- érosion de l'image au moyen d'un élément spécifique structurant ;
- dilatation de l'image au moyen d'un élément spécifique structurant ;
- retouche, en particulier en utilisant des régions au voisinage de la zone restaurée ;
- application d'un filtre bilatéral ;
- application d'un flou gaussien ;
- application d'un filtre d'Otsu, pour rechercher le seuil qui minimise la variance intra-classes ;
- application d'un filtre A*, pour rechercher un chemin entre des points ;
- application d'un seuil adaptatif (« Adaptive Threshold ») pour appliquer un seuil adaptatif à un vecteur ;
- application d'un filtre d'égalisation d'un histogramme d'une image en nuances de gris en particulier ;
- détection de flou ("BlurDetection"), pour calculer l'entropie d'une image en utilisant son laplacien ;
- détection de contours (« FindContour ») d'une image binaire ;
- remplissage de couleurs ("FloodFill"), notamment pour remplir un élément connecté avec une couleur déterminée.

Les méthodes non limitatives suivantes, bien qu'elles ne soient pas préférées, peuvent être également mises en œuvre :
- application d'un filtre "MeanShift", de manière à trouver un objet sur une projection de l'image ;
- application d'un filtre « CLAHE », pour « Contrast Limited Adaptive Histogram Equalization » ;
- application d'un filtre « Kmeans", pour déterminer le centre de clusters et de groupes d'échantillons autour de clusters ;
- application d'un filtre DFT, de manière à effectuer une transformation de Fourier discrète, directe ou inverse d'un vecteur ;
- calcul de moments ;
- application d'un filtre « HuMoments » pour calculer des invariants de Hu invariants ;
- calcul de l'intégrale d'une image ;
- application d'un filtre Scharr, permettant de calculer une dérivée de l'image en mettant en œuvre un opérateur de Scharr ;
- recherche de l'enveloppe convexe de points ("ConvexHull") ;
- recherche de points de convexité d'un contour ("ConvexityDefects") ;
- comparaison de formes (« MatchShapes ») ;
- vérification si des points sont dans un contour (« PointPolygonTest ») ;
- détection des contours Harris (« CornerHarris ») ;
- la recherche des valeurs propres minimales de matrices de gradients, pour détecter les coins ("CornerMinEigenVal ») ;
- application d'une transformée de Hough pour trouver des cercles dans une image en nuances de gris (« HoughCircles ») ;
- "Active contour modeling" (traçage du contour d'un objet à partir d'une image 2D potentiellement « bruitée » ) ;
- calcul d'un champ de forces, appelées GVF ("gradient vector flow"), dans une partie de l'image ;
- classement en cascade (« CascadeClassification »).

La détermination des contours des dent peut être optimisée en suivant les enseignements de PCT/EP2015/074900.

Dans un mode de réalisation, on fractionne le contour du fond de la goulotte et le contour des extrémités libres des dents de manière à définir des portions de ces contours pour chaque dent. On appelle « contours de dent extérieur » 24ᵢ et « contours de dent intérieur » 30ᵢ les portions du contour du fond de la goulotte et du contour des extrémités libres des dents (figures 12 et 14). Les adjectifs « intérieur » et « extérieur » ne sont utilisés ici qu'à des fins de clarté, respectivement. Sur la figure 12, les segments en traits pointillés séparent les portions successives.

La comparaison peut être alors effectuée par tout moyen, et notamment comme la comparaison des contours de dent intérieur et extérieur décrite dans EP 3 412 245.

En particulier, on peut, pour chacune d'une pluralité de dents pour lesquelles des contours de dent intérieur et extérieur ont été déterminés, procéder suivant les étapes suivantes :
i) détermination d'une distance entre les contours de dent intérieur et extérieur ;
ii) détermination d'un seuil de distance, de préférence à partir des distances déterminées à l'étape i) ;
iii) pour chacune desdites dents, détermination d'un score en distance, en fonction
   - de la distance entre les contours de dent intérieur et extérieur et
   - du seuil de distance.

A l'étape i), on détermine une distance d entre les contours de dent intérieur et extérieur de chacune desdites dents (figure 13).

La distance entre les contours de dent intérieur et extérieur d'une dent peut être par exemple la distance moyenne ou la distance maximale entre les pixels desdits contours correspondant à un même point de la dent.

La distance est de préférence mesurée en pixels, ce qui avantageusement évite de devoir établir une échelle.

A l'étape ii), on détermine un seuil de distance *Sd,* de préférence à partir des distances déterminées à l'étape i).

De préférence, à l'étape ii), le seuil de distance *Sd* est sensiblement égal à la plus faible des distances déterminées à l'étape i) (*dₘᵢₙ*). Classiquement, au moins une des dents traitées est en contact avec le fond de la goulotte dans laquelle elle est insérée. La distance entre les contours de dent intérieur et extérieur de cette dent est alors égale à une distance minimale *dₘᵢₙ* correspondant à une situation normale. Elle peut donc servir d'étalon pour évaluer, à l'étape iii), les distances entre les contours de dent intérieur et extérieur des autres dents. A l'étape iii), on détermine, pour chacune des dents, un score dit « score en distance » *S*(*d,Sd*), en fonction
- de la distance d entre les contours de dent intérieur et extérieur et
- du seuil de distance Sd.

De préférence, le score en distance pour une dent est égal à (*d-Sd*), c'est-à-dire à la différence entre la distance entre les contours de dent intérieur et extérieur de cette dent et le seuil de distance. Plus le score en distance est élevé, plus la dent concernée est décollée de la goulotte.

La figure 12 illustre un exemple de mise en œuvre des étapes i) à iii), dans lequel une dent D1 est décollée du fond de la gouttière et telle que *d - dₘᵢₙ > Sd.*

On peut également, pour chacune d'une pluralité de dents pour lesquelles des contours de dent intérieur et extérieur ont été déterminés, procéder suivant les étapes suivantes :
i') pour chaque couple d'une dent gauche et d'une dent droite adjacentes d'au moins un triplet de première, deuxième et troisième dents adjacentes pour chacune desquelles des contours de dent intérieur et extérieur ont été déterminés, les première et troisième dents étant adjacentes à la deuxième dent,
   détermination d'un décalage entre le contour de dent intérieur de ladite dent gauche et le contour de dent intérieur de ladite dent droite, dit « décalage intérieur », et détermination d'un décalage entre le contour de dent extérieur de ladite dent gauche et le contour de dent extérieur de ladite dent droite, dit « décalage extérieur »,
      puis
   détermination de la différence entre le décalage intérieur et le décalage extérieur, dite « différence de décalages » ;
ii') détermination d'un seuil de différence de décalages, de préférence à partir des différences de décalages déterminées à l'étape i') ;
iii') détermination, pour au moins une, de préférence pour chaque dent dudit triplet, d'au moins un score en décalage, en fonction de la différence de décalages avec une dent adjacente et du seuil de différence de décalages.

A l'étape i'), on considère au moins triplet constitué de première, deuxième et troisième dents, D1, D2 et D3, respectivement, les première et troisième dents étant adjacentes à la deuxième dent, c'est-à-dire les première, deuxième et troisième dents se succédant le long d'une arcade.

On détermine les contours de dent intérieurs 30₁, 30₂ et 30₃, et extérieurs 24₁, 24₂ et 24₃, respectivement, des dents D1, D2 et D3, respectivement.

Un « décalage » intérieur ou extérieur, respectivement, représente une distance entre les contours de dent intérieur ou extérieur, respectivement, de deux dents adjacentes.

On détermine
- un décalage entre le contour de dent intérieur de ladite première dent 30₁ et le contour de dent intérieur de ladite deuxième dent 30₂, dit « premier décalage intérieur », Δ₁₋₂i ;
- un décalage entre le contour de dent intérieur de ladite deuxième dent 30₂ et le contour de dent intérieur de ladite troisième dent 30₃, dit « deuxième décalage intérieur », Δ₂₋₃i ;
- un décalage entre le contour de dent extérieur de ladite première dent 24₁ et le contour de dent extérieur de ladite deuxième dent 24₂, dit « premier décalage extérieur », Δ₁₋₂e ;
- décalage entre le contour de dent extérieur de ladite deuxième dent 24₂ et le contour de dent extérieur de ladite troisième dent 24₃, dit « deuxième décalage extérieur », Δ₂₋₃e.

Le décalage intérieur entre les contours de dent intérieurs de deux dents adjacentes est de préférence égal à la plus grande distance entre les contours de dent intérieurs de ces deux dents.

Le décalage extérieur entre les contours de dent extérieurs de deux dents adjacentes est de préférence égal à la plus grande distance entre les contours de dent extérieurs de ces deux dents.

Les décalages intérieurs et les décalages extérieurs sont de préférence mesurés en pixels, ce qui avantageusement évite de devoir établir une échelle.

On détermine ensuite :
- la différence entre le premier décalage intérieur Δ₁₋₂i et le premier décalage extérieur Δ₁₋₂e, dite « première différence de décalages » Δ₁₋₂ (= Δ₁₋₂i - Δ₁₋₂e) ;
- la différence entre le deuxième décalage intérieur A₂₋₃i et le deuxième décalage extérieur Δ₂₋₃e, dite « deuxième différence de décalages » A₂₋₃ (= Δ₂₋₃i - Δ₂₋₃e).

Dans l'exemple de la figure 12, Δ₁₋₂ est beaucoup plus faible que Δ₂₋₃.

A l'étape ii'), on détermine un seuil de différence de décalages *S*Δ, de préférence à partir des première et deuxième différences de décalages Δ₁₋₂ et Δ₂₋₃ déterminées à l'étape i').

De préférence, à l'étape ii'), le seuil de décalage est sensiblement égal à la plus petite des différences de décalages déterminées à l'étape i').

Classiquement, au moins deux dents traitées adjacentes sont en contact avec le fond de la goulotte dans laquelle elles sont insérées. La différence de décalages entre ces deux dents traitées est alors sensiblement nulle. Cette différence de décalages nulle correspondant à une situation normale, elle peut donc servir d'étalon pour évaluer les différences de décalages entre les dents traitées adjacentes.

Sur la figure 13, la différence de décalages entre les deux dents D₁ et D₂ est sensiblement nulle.

A l'étape iii'), on détermine pour chaque couple de dents dudit triplet, au moins un score, dit « score en décalage », en fonction de la différence de décalages avec une dent adjacente à ladite dent et du seuil de différence de décalages.

En particulier, la différence de décalages de la première dent avec la deuxième dent peut être comparée au seuil de différence de décalages SΔ, par exemple de zéro. Le seuil de différence de décalages peut être notamment soustrait à la différence de décalages de la première dent avec la deuxième dent pour déterminer un score en décalage des première et deuxième dents.

Ce score en décalage indique, par exemple s'il est positif, qu'une ou chacune des première et deuxième dents est susceptible d'être décollée du fond de la goulotte.

Sur la figure 13, la différence de décalages entre les deux dents D₂ et D₃ est positive, ce qui constitue un indice de décollement de la deuxième ou de la troisième dent.

Sur la figure 13, la différence de décalages entre les deux dents D₁ et D₂ étant sensiblement nulle, la différence positive de décalages entre les deux dents D₂ et D₃ indique donc un décollement de la troisième dent.

De manière générale, quand un premier score en décalage pour des première et deuxième dents indique un décollement d'une de ces deux dents, on détermine un deuxième score en décalage pour la deuxième dent et une troisième dent adjacente à la deuxième dent. Si le deuxième score en décalage est inférieur au premier score en décalage, il est probable que c'est la première dent qui s'est décollée du fond de la goulotte. Sinon, c'est probablement la deuxième dent qui s'est décollée.

Alternativement, l'identification des dents non conformes, en particulier des dents décollées, peut être effectuée par un opérateur, de préférence par un professionnel de soins dentaires, de préférence encore un orthodontiste, par simple observation de l'image de gouttière affichée sur l'écran d'un ordinateur.

### Analyse au moyen d'un dispositif d'apprentissage profond

Un dispositif d'apprentissage profond, de préférence un réseau de neurones, peut être mis en œuvre pour identifier les dents non conformes sur l'image actualisée d'analyse.

On peut en particulier procéder comme décrit dans EP 3 432 218.

De préférence, on procède suivant les étapes suivantes :
I. création d'une base d'apprentissage comportant plus de 1 000, de préférence plus de 5 000, de préférence plus de 10 000, de préférence plus de 30 000, de préférence plus de 50 000, de préférence plus de 100 000 enregistrements historiques comportant chacun une image historique et un descriptif historique, chaque image historique comportant une ou plusieurs zones représentant chacune une dent, ou « zones de dent historiques », le descriptif historique associé précisant, pour chacune des zones de dent historique, une valeur d'attribut de dent pour au moins un attribut de dent ;
II. entraînement d'au moins un dispositif d'apprentissage profond, de préférence un réseau de neurones, au moyen de la base d'apprentissage ;
III. soumission de l'image actualisée d'analyse, de préférence une image de gouttière, audit au moins un dispositif d'apprentissage profond de manière qu'il détermine au moins une probabilité relative à une valeur d' attribut d'au moins une dent représentée sur une zone représentant, au moins partiellement, ladite dent dans l'image actualisée d'analyse, ou « zone de dent d'analyse », la valeur d'attribut étant relative à la conformité de ladite dent représentée ;
IV. détermination, en fonction de ladite probabilité, de la présence d'une dent de ladite arcade à une position représentée par ladite zone de dent d'analyse, et de la valeur d'attribut de ladite dent.

Le dispositif d'apprentissage profond peut être en particulier un réseau de neurones spécialisé dans la localisation et la détection d'objets dans une image (« Object Detection Network »), en particulier être choisi parmi les exemples de ces réseaux cités ci-dessus.

Il permet non seulement d'identifier les représentations de dents sur l'image actualisée d'analyse, mais aussi de déterminer si elles sont conformes ou non.

**A l'étape I,** l'attribut de dent est un attribut dont la valeur est propre à chaque dent.

Par exemple, l'attribut de dent « décollement » aura la valeur « conforme » ou « non conforme » selon que la dent concernée apparait normalement ou anormalement positionnée par rapport à la gouttière, respectivement.

**A l'étape II,** on peut présenter, en entrée du dispositif d'apprentissage profond, des enregistrements historiques comportant chacun une image historique et un descriptif décrivant, de préférence pour chaque dent représentée l'image historique, les contours de la dent et les non conformités éventuelles. Le dispositif d'apprentissage profond apprend ainsi progressivement à reconnaître sur une image, des motifs, en anglais *« patterns »,* et à les associer à des zones de dent et à des valeurs d'attribut de dent relatives aux non conformités, en en particulier relatives à des décollements de dent.

**A l'étape III,** le dispositif d'apprentissage profond reconnait lesdits motifs dans l'image actualisé d'analyse. Il peut en particulier déterminer une probabilité relative à :
- la présence, à un emplacement dans ladite image d'analyse, d'une zone représentant, au moins partiellement, une dent, ou « zone de dent d'analyse »,
- la valeur d'attribut de la dent représentée sur ladite zone de dent d'analyse.

Par exemple, sur une image de gouttière, il est capable de déterminer qu'il y a 99,5% de chances qu'une forme de l'image d'analyse représente une dent et qu'il y a 99% de chances que cette dent soit décollée de la gouttière.

De préférence, le dispositif d'apprentissage profond analyse toute l'image actualisée d'analyse et détermine des probabilités pour l'ensemble des zones de dent d'analyse qu'il a identifiées.

**A l'étape IV,** on détermine, de préférence par ordinateur, de préférence pour chaque dent représentée sur l'image actualisée d'analyse, en fonction des probabilités déterminées à l'étape III, si une dent représentée doit être considérée comme conforme ou non conforme. Par exemple, on peut considérer que si la probabilité qu'une dent soit non conforme est supérieure à un seuil, par exemple de 98%, cette dent est décollée de la gouttière.

### Combinaison d'une analyse avec une image de gouttière et avec une image de dentition nue

De préférence, on procède à une détection des dents non-conformes par comparaison d'une image de dentition nue avec le modèle intermédiaire actif, et à une détection par analyse d'une image de gouttière seule. Le résultat final en est amélioré.

En effet, si l'image actualisée d'analyse est une image de gouttière, certains décollements peuvent être difficiles à détecter par la seule analyse de cette image. Des dents non conformes peuvent donc être considérées comme conformes à la seule analyse d'une image de gouttière. Avec une image de dentition nue et le modèle intermédiaire actif, il peut être possible de détecter des non conformités non détectables sur l'image de gouttière.

Si aucune dent non conforme n'est détectée, le traitement peut se poursuivre sans modification du scénario de traitement. Les gouttières conçues à l'étape d) sont donc toujours adaptées au traitement. De préférence, un message d'information est envoyé au patient pour l'informer que le traitement se déroule correctement. De préférence, un message d'information est également envoyé à l'orthodontiste qui suit le patient.

Si une ou plusieurs dents non conformes sont détectées, le procédé se poursuit par l'étape 4).

**A l'étape 4),** on identifie les modèles de dent du modèle intermédiaire actif qui représentent les dents identifiées à l'étape 3) comme étant des dents non conformes, en particulier décollées.

Cette identification peut être effectuée par tout ordinateur ayant accès au modèle intermédiaire actif et aux identifiants des dents non conformes, en particulier décollées, déterminés à l'étape 3). Ces identifiants peuvent être transmis à un ordinateur ayant accès au modèle intermédiaire actif ou réciproquement, le modèle intermédiaire actif peut être transmis à un ordinateur ayant accès aux identifiants.

De préférence, le modèle intermédiaire actif est transmis à un ordinateur centralisé qui a analysé l'image actualisée d'analyse et détecté les dents non conformes, en particulier décollées, à l'étape 3), et l'ordinateur centralisé exécute l'étape 4).

En variante, l'étape 4) peut être réalisée par un opérateur ayant accès au modèle intermédiaire actif.

**A l'étape 5),** on déforme le modèle intermédiaire actif jusqu'à trouver une configuration compatible avec une image actualisée prise à l'instant actualisé. De préférence, cette image actualisée, dite « image actualisée de déformation », est une image de dentition nue, c'est-à-dire une image d'arcade nue, sans gouttière. La déformation du modèle intermédiaire actif en est facilitée.

L'image actualisée de déformation peut être identique ou différente de l'image actualisée d'analyse. De préférence, elle est acquise et transmise comme décrit ci-dessus pour l'image actualisée d'analyse, de préférence avec un téléphone mobile, de préférence avec un kit d'acquisition comportant un support sur lequel sont fixés le téléphone mobile et un écarteur dentaire. De préférence, l'image actualisée de déformation est extra-orale.

Une déformation en agissant sur tous les modèles de dent du modèle intermédiaire actif est très longue à mettre en œuvre. Surtout, les inventeurs ont constaté qu'elle ne permet pas d'aboutir à un modèle représentant correctement la configuration réelle de l'arcade à l'instant actualisé. En particulier, ils ont constaté que des images actualisées extra-orales ne permettent pas toujours de déterminer la position précise des dents au fond de la bouche, et notamment des molaires, si tous les modèles de dent sont susceptibles d'être déplacés lors de la déformation. Une telle déformation peut donc conduire à s'écarter sensiblement du modèle intermédiaire actif dans des régions où ce modèle représente correctement la position réelle des dents. Les gouttières fabriquées à partir de ces modèles déformés peuvent donc être inexploitables.

Dans un mode de réalisation de l'invention, le modèle intermédiaire actif n'est pas déformé, sauf dans les régions des modèles de dent de dents non conformes, en particulier décollées. La forme générale du modèle intermédiaire actif est donc conservée et seuls ces modèles de dent sont déplacés.

La déformation du modèle intermédiaire actif se limite ainsi à des déplacements de modèles de dents du modèle intermédiaire actif qui représentent des dents non conformes.

En particulier, la déformation du modèle intermédiaire par le seul déplacement des modèles de dent de dents non conformes permet d'évaluer très précisément l'écart relatif desdites dents non conformes à l'instant actualisé par rapport au modèle intermédiaire actif avant déformation.

Dans un mode de réalisation préféré, le déplacement des modèles de dent est poursuivi jusqu'à ce que l'erreur de positionnement pour chaque modèle de dent, au regard de l'image actualisée de déformation soit inférieure à 1 mm, de préférence inférieure à 5/10 mm, de préférence inférieure à 3/10 mm, de préférence inférieure à 2/10 mm, de préférence inférieure à 1/10 mm.

### Cadrage

De préférence, on recherche des conditions d'acquisition virtuelles qui correspondent aux conditions d'acquisition réelles de l'image actualisée de déformation et permettent d'observer le modèle intermédiaire actif de manière que la vue dudit modèle soit la plus proche possible de l'image actualisée de déformation. Cette recherche peut avoir été faite à l'étape 3) si l'image actualisée de déformation est l'image actualisée d'analyse.

Dans un mode de réalisation, ces conditions d'acquisition virtuelles sont déterminées en prenant en compte tous les modèles de dent. Les dents non conformes vont donc contribuer négativement à la précision desdites conditions d'acquisition virtuelles. Ces dents sont cependant peu nombreuses et leur impact est généralement faible.

De préférence, les conditions d'acquisition virtuelles sont déterminées sans tenir compte des modèles de dent des dents non conformes, et en particulier décollées. Il est ainsi possible de déterminer des conditions d'acquisition virtuelles « cadrées » qui correspondent précisément aux conditions d'acquisition réelles de l'image actualisée de déformation et permettent d'observer le modèle intermédiaire actif de manière que la vue dudit modèle, dite « vue cadrée », soit très proche de l'image actualisée de déformation. La vue cadrée obtenue est en particulier très précise pour les dents conformes puisqu'elle n'est dégradée par l'effet des dents non conformes.

En particulier dans ce dernier mode de réalisation, les représentations des dents conformes, sur l'image actualisée de déformation peuvent avantageusement servir de repères dont on connaît la position dans le modèle intermédiaire actif. Sur la vue obtenue dans lesdites conditions d'acquisition virtuelles, ces repères ont en effet des positions relatives identiques à celles qu'ils ont dans l'image actualisée de déformation.

De préférence, on utilise au moins trois points non alignés comme repères, par exemple les cuspides de dents conformes, en particulier non décollées. L'analyse des distances entre les représentations de ces repères sur l'image actualisée de déformation permet alors, par simple calcul, d'évaluer lesdites conditions d'acquisition virtuelles.

Avantageusement, lesdites conditions d'acquisition virtuelles peuvent ensuite servir pour tester toutes les positions des modèles de dent des dents non conformes, et en particulier décollées.

### Déplacement des modèles de dent des dents non conformes par optimisation

La déformation du modèle intermédiaire actif est de préférence effectuée au moyen d'un algorithme d'optimisation.

De préférence, on met en œuvre un processus itératif selon lequel, à chaque itération, un ou plusieurs modèles de dent de dents non conformes, en particulier décollées, sont déplacés, puis on évalue le degré de compatibilité entre le modèle intermédiaire actif ainsi modifié, et l'image actualisée de déformation, les itérations étant poursuivies jusqu'à trouver une compatibilité du modèle modifié et de l'image actualisée de déformation.

Le nombre d'itérations peut être, par exemple, supérieur à 10, supérieur à 100, supérieur à 1 000, supérieur à 10 000 et/ou inférieur à 1 000 000.

Les étapes suivantes sont de préférence mises en œuvre :
A) analyse de l'image actualisée de déformation et réalisation d'une carte actualisée relative à une information discriminante ;
B) recherche, à partir de la carte actualisée et par déplacement de modèles de dent de dents non conformes, en particulier décollées, d'un modèle actualisé correspondant au positionnement des dents lors de l'acquisition de l'image actualisée de déformation, la recherche étant de préférence effectuée au moyen d'une méthode métaheuristique, de préférence évolutionniste, de préférence par recuit simulé.

Suivant l'étape A), l'image actualisée de déformation est analysée de manière à réaliser une carte actualisée relative à au moins une information discriminante.

Une "information discriminante" est une information caractéristique qui peut être extraite d'une image (*"image feature "*), classiquement par un traitement informatique de cette image.

Une information discriminante peut présenter un nombre variable de valeurs. Par exemple, une information de contour peut être égale à 1 ou 0 selon qu'un pixel appartient ou non à un contour. Une information de brillance peut prendre un grand nombre de valeurs. Le traitement de l'image permet d'extraire et de quantifier l'information discriminante.

La carte actualisée représente une information discriminante dans le référentiel de l'image actualisée de déformation. L'information discriminante est de préférence choisie dans le groupe constitué par une information de contour, une information de couleur, une information de densité, une information de distance, une information de brillance, une information de saturation, une information sur les reflets et des combinaisons de ces informations. L'information discriminante est de préférence une information de contour.

L'objectif de l'étape B) est de modifier le modèle intermédiaire actif jusqu'à obtenir un modèle actualisé qui correspond à l'image actualisée de déformation. Idéalement, le modèle actualisé est donc un modèle tridimensionnel numérique de l'arcade à partir duquel l'image actualisée de déformation aurait pu être prise si ce modèle avait été réel, en faisant abstraction de la gouttière si elle est représentée sur l'image actualisée de déformation.

On teste donc successivement différents modèles, le choix d'un modèle à tester dépendant de préférence du niveau de correspondance des modèles précédemment testés avec l'image actualisée de déformation. Ce choix est de préférence effectué en suivant un procédé d'optimisation connu, en particulier choisi parmi les procédés d'optimisation métaheuristiques, de préférence évolutionnistes, en particulier dans les procédés de recuit simulé.

De préférence, le procédé d'optimisation métaheuristique est choisi dans le groupe formé par
- les algorithmes évolutionnistes, de préférence choisie parmi: les stratégies d'évolution, les algorithmes génétiques, les algorithmes à évolution différentielle, les algorithmes à estimation de distribution, les systèmes immunitaires artificiels, la recomposition de chemin Shuffled Complex Evolution, le recuit simulé, les algorithmes de colonies de fourmis, les algorithmes d'optimisation par essaims particulaires, la recherche avec tabous, et la méthode GRASP ;
- l'algorithme du kangourou,
- la méthode de Fletcher et Powell,
- la méthode du bruitage,
- la tunnelisation stochastique,
- l'escalade de collines à recommencements aléatoires,
- la méthode de l'entropie croisée, et
les méthodes hybrides entre les méthodes métaheuristiques citées ci-dessus.

De préférence, l'étape B) comporte les étapes suivantes :
B1) définition d'un modèle à tester par déplacement, dans le modèle intermédiaire actif,
de modèles de dent de dents non conformes, en particulier décollées ;
B3) réalisation d'une vue du modèle à tester dans lesdites conditions d'acquisition virtuelles cadrées ;
B4) traitement de la vue pour réaliser au moins une carte de test représentant, au moins partiellement, ladite information discriminante ;
B5) test du modèle à tester, par comparaison de la carte actualisée et de ladite carte de test, de manière à mesurer la différence entre la carte actualisée et ladite carte de test,
cette différence étant encore appelée « degré de compatibilité » ou « degré de concordance » ;
B6) en fonction de ladite différence, par exemple si la différence est inférieure à un seuil,
   - modification du modèle à tester par déplacement d'un ou plusieurs modèles de dent de dents non conformes, en particulier décollées, puis reprise à l'étape B3) ; ou
   - définition du modèle actualisé comme étant le modèle testé dont la carte de test présente le moins de différence avec la carte actualisée.

La mesure de ladite différence dépend de l'information discriminante utilisée. Ladite différence peut être par exemple mesurée par le rapport du nombre de points qui appartiennent à la fois à un contour de la carte de test et à un contour de la carte actualisée, sur le nombre de points total du contour de la carte actualisée, ou être mesurée par le produit de l'inverse de la distance moyenne entre les contours représentés sur lesdites cartes actualisée et de test, et de la longueur du contour représenté sur la carte actualisée.

Le modèle actualisé obtenu à l'issue de l'étape B) est ainsi un modèle résultant de modifications successives du modèle intermédiaire actif, très précis, car lui-même issu d'une déformation du modèle initial. Avantageusement, le modèle actualisé est donc très précis, bien qu'il ait été obtenu à partir de simples photographies ou images de film prises sans précautions particulières.

Les modèles de dent ne peuvent pas s'interpénétrer. Le déplacement des modèles de dent des dents décollées, en particulier à l'étape 5), est donc limité par les modèles de dent des dents non décollées, maintenues immobiles. La recherche du modèle actualisé en est encore accélérée.

Le déplacement des modèles de dents du modèle intermédiaire actif permet d'obtenir un modèle actualisé qui peut être observé dans des conditions dans lesquelles la vue du modèle actualisé est compatible avec l'image actualisée de déformation. Autrement dit, cette vue peut être superposée en registre à l'image actualisée de déformation de manière que les dents représentées sur la vue et sur l'image actualisée de déformation se superposent sensiblement exactement.

La mise à jour, ou « actualisation », du modèle intermédiaire actif peut être affinée en répétant les opérations précédentes avec plusieurs images actualisées comme images actualisées d'analyse et/ou de déformation. Elle conduit à un modèle actualisé qui représente les dents sensiblement dans leur configuration réelle à l'instant actualisé. Alternativement ou en complément à l'utilisation de méthodes d'optimisation, la recherche du modèle actualisé avoir recours à un dispositif d'apprentissage profond, de préférence un réseau de neurones.

### Déplacement des modèles de dent des dents non conformes en fonction d'une évaluation de la non-conformité

Dans un mode de réalisation, l'analyse de l'image actualisée d'analyse permet de quantifier la non-conformité, par un « degré de non-conformité ».

En particulier, dans un mode de réalisation, l'analyse de l'image actualisée d'analyse permet de mesurer le décollement, de préférence l'évolution du décollement le long du bord d'une dent décollée.

De préférence, on utilise cette information sur la non-conformité pour déplacer les modèles de dent des dents non conformes, en particulier décollées, à l'étape 5). Par exemple sur la figure 12, la mesure de *d* peut être utilisée pour déplacer la dent D1 vers le bas, par exemple par une translation de *d-dₘᵢₙ.*

Le déplacement des modèles de dent en fonction de la nature et de l'amplitude des non-conformités évaluées à partir de l'image actualisée d'analyse est particulièrement utile comme opération initiale de l'étape 5). De préférence, cette opération de déplacement grossier est suivie d'une opération de déplacement fin, de préférence par optimisation ou avec un dispositif d'apprentissage profond, de préférence un réseau de neurones.

**A l'étape** 6), on conçoit au moins une gouttière actualisée adaptée pour modifier l'arcade depuis sa configuration réelle à l'instant actualisé vers la configuration finale. Par « *vers* ladite configuration finale », on entend que la gouttière actualisée est conformée pour modifier la configuration de l'arcade pour la rapprocher de la configuration finale. Plusieurs nouvelles gouttières peuvent être cependant nécessaires pour atteindre la configuration finale.

De préférence, on conçoit une nouvelle série de gouttières en tenant compte du modèle actualisé plutôt que du modèle initial. De préférence, on procède suivant les étapes a) à d) décrites précédemment, l'instant initial et le modèle initial étant remplacés par l'instant actualisé et le modèle actualisé, respectivement.

**A l'étape 7),** on fabrique au moins la ou les premières gouttières de la nouvelle série de gouttières, de préférence comme à l'étape e).

Les gouttières peuvent être par exemple fabriquées suivant l'enseignement de EP1835864. Ces nouvelles gouttières sont données au patient, par exemple envoyées par la poste.

Le patient poursuit ensuite le traitement avec ces nouvelles gouttières.

### Système

Les procédés selon l'invention sont au moins en partie, de préférence entièrement mis en œuvre par ordinateur. Tout ordinateur peut être envisagé, notamment un PC, un serveur, ou une tablette.

Classiquement, un ordinateur comporte en particulier un processeur, une mémoire, une interface homme-machine, comportant classiquement un clavier, un écran et une souris, un module de communication par internet, par WIFI, par Bluetooth^{®} ou par le réseau téléphonique, et des bus de communication. La mémoire comporte classiquement mémoires ROM et RAM. Un logiciel configuré pour mettre en œuvre une partie d'un procédé de l'invention considéré est chargé dans la mémoire de l'ordinateur.

L'ordinateur peut être également connecté à une imprimante, à un scanner, à un lecteur de CD-ROM, de DVD, de disque dur, à un graveur, à un haut-parleur.

Les bus de communication sont les organes assurant la communication, filaire ou à distance, entre les autres éléments de l'ordinateur.

Un ordinateur peut être utilisé pour, de manière automatique ou avec l'aide d'un opérateur :
- à l'étape a), la visualisation et la manipulation du modèle initial, et en particulier pour modifier le point d'observation du modèle initial ;
- à l'étape a), le découpage du modèle initial ;
- la détermination du modèle final ;
- la détermination et/ou la visualisation de scénarii potentiels pour un même traitement ;
- la visualisation et/ou la détermination du scénario de traitement, et donc la détermination et l'enregistrement des modèles intermédiaires ;
- à l'étape 2), la détermination du modèle intermédiaire actif ;
- à l'étape 3), l'analyse de l'image actualisée d'analyse pour détecter les représentations de dents non conformes, en particulier décollées ;
- à l'étape 4), l'identification des modèles de dent de dents non conformes, en particulier décollées, dans le modèle intermédiaire actif ;
- à l'étape 5), le déplacement des modèles de dent du modèle intermédiaire actif ;
- aux étapes optionnelles 6) et d), la conception des gouttières.

L'opérateur peut être en particulier un professionnel de soins dentaires, de préférence un orthodontiste. L'ordinateur peut mettre en œuvre un ou plusieurs dispositifs d'apprentissage profond, de préférence des réseaux de neurones.

La figure 6 représente un système dans un mode de réalisation préféré de l'invention.

Ce système comporte une pluralité de téléphones mobiles, par exemple plus de 1 000, de préférence plus de 10 000 téléphones mobiles 21 appartenant à des patients P et communiquant chacun avec un ordinateur centralisé 50.

De préférence, l'ordinateur centralisé 50 est configuré pour recevoir et traiter des images actualisées, notamment des images de gouttière *Ig* et des images de dentition nue *Id* de plusieurs patients, de préférence de plus de 100, plus de 1 000, plus de 10 000 patients. L'ordinateur centralisé 50 peut être configuré pour recevoir et traiter des images actualisées de patients tous suivis par un même orthodontiste. De préférence l'ordinateur centralisé 50 est configuré pour recevoir et traiter des images actualisées de patients suivis par plusieurs orthodontistes différents, par exemple plus de 10, plus de 100 ou plus de 1000 orthodontistes.

L'ordinateur centralisé 50 comporte un module de communication pour communiquer, par exemple par WIFI, par Bluetooth^{®}, par fibre optique ou par le réseau téléphonique, avec une pluralité d'ordinateurs locaux 52, par exemple plus de 10 ou plus de 100 ordinateurs locaux, de préférence disposés dans des cabinets d'orthodontie.

Le système comporte encore une pluralité de scanners 54, en communication avec un ou plusieurs ordinateurs locaux, de préférence chacun avec un unique ordinateur local, par exemple par liaison filaire, par WIFI, par Bluetooth^{®}, par fibre optique ou par le réseau téléphonique. De préférence, chaque scanner 54 est dans le même lieu qu'un ordinateur local respectif, de préférence dans le même cabinet d'orthodontie.

Le système comporte encore une unité de fabrication pourvue d'un ordinateur de fabrication 56 en communication avec l'ordinateur centralisé et/ou avec les ordinateurs locaux, par exemple par liaison filaire, par WIFI, par Bluetooth^{®}, par fibre optique ou par le réseau téléphonique.

### Exemple

La génération du modèle initial M₀, à l'étape a), est réalisée, à l'instant initial, avec un scanner 54. Il est ensuite transmis à l'ordinateur local 52. Un logiciel, chargé dans l'ordinateur local, permet de préférence un découpage automatique du modèle initial, pour créer les modèles de dent.

Après avoir examiné le patient, l'orthodontiste définit un modèle final M_{f}, en déplaçant les modèles de dent au moyen de l'ordinateur local.

De préférence, l'ordinateur local 52 est programmé pour, aux étapes b) et c), déterminer un ou plusieurs scénarii pour modifier l'arcade afin qu'elle atteigne la configuration finale correspondant au modèle final. De préférence, l'ordinateur local permet encore à l'orthodontiste de visualiser les scénarii potentiels et de choisir un scénario de traitement. De préférence, l'orthodontiste a également la possibilité de créer ou de modifier un scénario proposé par l'ordinateur local 52.

Les instants intermédiaires et les modèles intermédiaires correspondant peuvent être définis par l'ordinateur local ou proposés par l'ordinateur local 52 à l'orthodontiste pour qu'il les valide et/ou les modifie.

L'ordinateur local 52 transmet à l'ordinateur central 50 le scénario de traitement, et en particulier au moins les modèles intermédiaires Mᵢ, et les modèles initial M₀ et final M_{f}.

A l'étape d), un logiciel, chargé dans l'ordinateur centralisé 50, détermine, à partir de ces modèles, la forme des gouttières à fabriquer, puis transmet à l'unité de fabrication les informations I₀ pour fabriquer, à l'étape e), les gouttières G₀.

Alternativement, les modèles initial, intermédiaires et final peuvent être transmis, par l'ordinateur centralisé 50, à l'ordinateur de fabrication 56, qui détermine, à l'étape d), la forme des N gouttières et commande la fabrication.

Alternativement encore, l'étape d) peut être exécutée par l'ordinateur local 52. L'ordinateur local transmet alors à l'unité de fabrication les informations nécessaires à la fabrication des gouttières.

Les gouttières G₀ sont envoyées au patient, qui commence son traitement.

Le patient reçoit de préférence des rappels, lui demandant de prendre une ou plusieurs images actualisées, de préférence au moins une image de gouttière et, de préférence, une ou plusieurs images de dentition nue.

A l'étape 1), à un instant actualisé, le patient prend des photos, avec et sans la gouttière active qu'il doit porter à cet instant. Le patient utilise son téléphone mobile 21 à cet effet et transfère ces photos à l'ordinateur centralisé 50.

A l'étape 2), l'ordinateur centralisé identifie le modèle intermédiaire actif, en fonction de l'instant actualisé d'acquisition des photos. De préférence, il identifie comme modèle intermédiaire actif, le modèle intermédiaire dont l'instant intermédiaire est le plus proche de l'instant actualisé. De préférence encore, il identifie comme modèle intermédiaire actif, le modèle intermédiaire qui a été utilisé pour concevoir la gouttière active, portée par le patient à l'instant actualisé.

A l'étape 3), l'ordinateur centralisé 50 analyse les photos, en particulier les photos représentant la gouttière en position de service, pour détecter automatiquement les non conformités, et en particulier le décollement de dents, et identifier les dents non conformes, en particulier décollées. Si aucune dent non conforme, en particulier décollée, n'est détectée, il transmet un message au patient et/ou à l'orthodontiste pour l'informer que le traitement se déroule normalement.

De préférence, l'ordinateur centralisé 50 est programmé ces dents.

Sinon, à l'étape 4), l'ordinateur centralisé 50 identifie, éventuellement avec l'aide d'un opérateur, les modèles de dent des dents non conformes, en particulier décollées.

A l'étape 5), l'ordinateur centralisé modifie le modèle intermédiaire actif en déplaçant les modèles de dent des dents non conformes, en particulier décollées, jusqu'à trouver un modèle actualisé Mₐ compatible avec les photos prises à l'instant actualisé.

A l'étape 6), l'ordinateur centralisé conçoit une ou plusieurs nouvelles gouttières G₁ pour tenir compte du modèle actualisé, puis transmet les informations nécessaires à leur fabrication à l'ordinateur de fabrication 56 de l'unité de fabrication.

A l'étape 7), l'unité de fabrication fabrique les nouvelles gouttières G₁. Les nouvelles gouttières sont alors transmises au patient pour qu'il poursuive son traitement avec ces nouvelles gouttières.

### Variantes

Dans un mode de réalisation, un procédé selon l'invention utilise une image de gouttière pour actualiser un modèle intermédiaire actif déterminé, à un instant initial, pour représenter l'arcade dans une configuration anticipée à un instant intermédiaire *tᵢ* marquant un changement de gouttière. Les modèles intermédiaires du scénario de traitement représentent donc les configurations de l'arcade attendues à des instants intermédiaires respectifs *tₙ* auxquels il sera demandé au patient de changer de gouttière. Le patient commencera donc à porter la première gouttière de la série de gouttières au début du traitement, c'est-à-dire sensiblement à l'instant initial *t₁* auquel le modèle initial a été généré, puis changera de gouttière aux instants intermédiaires *t₂, t₃,* etc. L'instant intermédiaire *tᵢ* est donc l'instant auquel il est prévu que le patient remplace la (i-1)^{ième} gouttière orthodontique de la série par la i^{ème} gouttière orthodontique de la série, *i* étant supérieur ou égal à 2. Si le traitement est prévu avec 30 gouttières par exemple (N=30), il commencera donc à porter la 30^{ième} gouttière à l'instant *t₃₀,* et la portera jusqu'à l'instant final *t₃₁.*

Le nombre N de gouttières peut être supérieur à 5, supérieur à 10, supérieur à 20, ou supérieur à 30 et/ou inférieur à 60, de préférence inférieur à 50.

L'intervalle temporel entre deux changements de gouttières successifs, c'est-à-dire entre deux instants intermédiaires successifs, peut être supérieur à 7 jours, ou supérieur à 15 jours et/ou inférieur à 60 jours, de préférence inférieur à 30 jours.

Dans un mode de réalisation, le scénario de traitement n'est pas limité à une série de modèles intermédiaires pour les changements de gouttières, mais comporte d'autres modèles intermédiaires dont l'instant intermédiaire ne marque pas un changement de gouttière. De préférence, le scénario de traitement est une série sensiblement continue de modèles intermédiaires. Le scénario de traitement est donc similaire à un film permettant de visualiser l'évolution du modèle initial jusqu'au modèle final.

Avantageusement, un contrôle de l'adéquation d'une gouttière active est donc avantageusement possible à tout instant. Les images actualisées peuvent être acquises à tout instant actualisé au cours du traitement. On choisit alors, à partir du scénario de traitement, un modèle intermédiaire actif qui correspond à l'instant actualisé, c'est-à-dire qui représente l'arcade dans un configuration prévue, d'après le scénario de traitement, pour l'instant actualisé.

Dans un mode de réalisation, un modèle intermédiaire supplémentaire peut être généré à partir de modèles intermédiaires du scénario de traitement, et ajouté au scénario de traitement. Notamment, si l'instant actualisé est entre deux instants intermédiaires *tᵢ* et *t_{i+1,}* un modèle intermédiaire supplémentaire peut être créé, par exemple par interpolation, à partir des modèles intermédiaires des instants intermédiaires *tᵢ* et *t*_{*i+*1}, pour servir de modèle intermédiaire actif. Un modèle intermédiaire supplémentaire peut être en particulier généré au cours du traitement.

Comme cela apparaît clairement à présent, un procédé selon l'invention permet, à partir de simples photos ou d'un simple film, d'aboutir à un modèle actualisé très précis, correspondant à la configuration réelle de l'arcade à l'instant actualisé, mais sans avoir à réaliser un nouveau scan. Le procédé peut être ainsi mis en œuvre sans avoir à prendre un rendez-vous chez l'orthodontiste.

Bien entendu, l'invention n'est pas limitée aux modes de réalisation décrits ci-dessus et représentés.

Un traitement orthodontique peut être thérapeutique et/ou esthétique.

Plusieurs images actualisées peuvent être utilisées à l'étape 3) et/ou à l'étape 5).

L'erreur de positionnement d'un modèle de dent peut être utilisée pour détecter une dérive dans le traitement orthodontique, c'est-à-dire pour détecter une situation dans laquelle l'évolution de la position des dents ne suit pas le scénario de traitement.

Enfin, le patient n'est pas limité à un être humain. En particulier, un procédé selon l'invention peut être utilisé pour un autre animal.

## Revendications

1. Procédé de génération d'un modèle numérique tridimensionnel d'une arcade dentaire d'un patient, dit « modèle actualisé », au cours d'un traitement de ladite arcade dentaire avec une gouttière orthodontique, dite « gouttière active », ledit traitement ayant été simulé au moyen d'un scénario de traitement généré à un instant initial (t1) et comportant une pluralité de modèles intermédiaires (Mi), chaque modèle intermédiaire étant un modèle numérique tridimensionnel de l'arcade dentaire, ledit modèle intermédiaire étant découpé en modèles de dent et étant déterminé pour représenter l'arcade dentaire à un instant intermédiaire (ti) respectif postérieur à l'instant initial, le procédé de génération comportant les étapes suivantes :
1) à un instant actualisé au cours du traitement, acquisition d'au moins une image actualisée, chaque image actualisée étant une image de gouttière (Ig) représentant la gouttière active fixée, en position de service, sur l'arcade dentaire, ou une image de dentition nue (Id) représentant l'arcade dentaire sans gouttière ;
2) avant l'étape 4), de préférence avant l'étape 3), détermination, en fonction de l'instant actualisé, d'un dit modèle intermédiaire, ou « modèle intermédiaire actif » ;
3) recherche, sur une image actualisée, dite « image actualisée d'analyse », d'une ou plusieurs représentations de dents non conformes avec le scénario de traitement ;
si une ou plusieurs dents non conformes sont détectées,
4) identification d'un ou plusieurs modèles de dent représentant la ou les dents non conformes, respectivement, dans le modèle intermédiaire actif, c'est-à-dire de dent qui n'est pas dans la position prévue dans le scénario de traitement ;
5) déformation du modèle intermédiaire actif jusqu'à obtenir un modèle actualisé compatible avec au moins une dite image actualisée, dite « image actualisée de déformation »
procédé dans lequel on mesure la non-conformité d'au moins une dite dent non conforme par comparaison de ladite image actualisée avec le modèle intermédiaire actif, puis à l'étape 5), on déplace, en fonction de ladite mesure, le modèle de dent de ladite au moins une dent non conforme;
l'étape 2) étant effectuée par un ordinateur en comparant l'instant actualisé avec les instants intermédiaires des modèles intermédiaires du scénario de traitement.

2. Procédé selon la revendication immédiatement précédente, dans lequel, à l'étape 3), pour détecter une dent non conforme,
- on recherche une position, une orientation et une calibration d'un appareil d'acquisition virtuel qui permettent au dit appareil d'acquisition virtuel d'avoir une vue sur le modèle intermédiaire actif la plus proche possible de l'image actualisée d'analyse ; puis
on compare ladite vue et ladite image actualisée d'analyse, ou on compare une carte actualisée représentant une information discriminante de ladite image actualisée d'analyse avec une carte de référence représentant ladite information discriminante sur ladite vue ; et/ou
- l'image actualisée d'analyse étant une image de gouttière, on détermine, sur l'image actualisée d'analyse, un contour d'au moins une dent et un contour de la gouttière active, puis on compare lesdits contours.

3. Procédé selon la revendication immédiatement précédente, dans lequel,
avant ledit processus itératif, on recherche une position, une orientation et une calibration d'un appareil d'acquisition virtuel permettant d'observer le modèle intermédiaire actif selon une vue dans laquelle la représentation des dents conformes est superposable en registre avec la représentation desdites dents conformes sur l'image actualisée de déformation, ou « conditions d'acquisition virtuelles cadrées », puis, pendant ledit processus itératif, à chaque itération, le degré de compatibilité entre le modèle de l'arcade en cours de test et l'image actualisée de déformation est évalué en comparant l'image actualisée de déformation et une vue, dans lesdites conditions d'acquisition virtuelles cadrées, du modèle de l'arcade en cours de test.

4. Procédé selon l'une quelconque des revendications précédentes, dans lequel, à l'étape 5), la déformation du modèle intermédiaire actif comprend des déplacements de modèles de dent dudit modèle intermédiaire actif, et dans lequel on poursuit lesdits déplacement jusqu'à ce que l'erreur de positionnement pour chaque modèle de dent, au regard de l'image actualisée de déformation, soit inférieure à 1 mm, de préférence inférieure à 5/10 mm, de préférence inférieure à 3/10 mm, de préférence inférieure à 2/10 mm, de préférence inférieure à 1/10 mm.

5. Procédé selon l'une quelconque des revendications précédentes, dans lequel, à l'étape 5), l'image actualisée de déformation est une image de dentition nue.

6. Procédé selon l'une quelconque des revendications précédentes, dans lequel des modèles intermédiaires du scénario de traitement représentent l'arcade dentaire dans des configurations prévues à des instants intermédiaires marquant des changements de gouttière.

7. Procédé selon l'une quelconque des revendications précédentes, dans lequel, avant l'étape 2), un modèle intermédiaire de l'arcade dentaire est généré à partir de modèles intermédiaires du scénario de traitement, puis ajouté au scénario de traitement à titre de modèle intermédiaire.

8. Procédé de fabrication d'une gouttière orthodontique, ledit procédé comportant un procédé de génération d'un modèle actualisé selon l'une quelconque des revendications précédentes, puis les étapes suivantes :
6) conception, à partir du modèle actualisé et d'un modèle final représentant l'arcade dans une configuration finale théorique, d'une gouttière « actualisée » adaptée pour modifier l'arcade dentaire depuis une configuration réelle à l'instant actualisé vers ladite configuration finale théorique ;
7) fabrication de la gouttière actualisée et remise de la gouttière actualisée au patient.

9. Programme d'ordinateur, comprenant des instructions de code de programme pour l'exécution des étapes suivantes :
2) avant l'étape 4), de préférence avant l'étape 3), détermination, en fonction de l'instant actualisé, d'un dit modèle intermédiaire, ou « modèle intermédiaire actif » ;
3) recherche, sur une image actualisée, dite « image actualisée d'analyse », d'une ou plusieurs représentations de dents non conformes avec le scénario de traitement, si une ou plusieurs dents non conformes sont détectées,;
4) identification d'un ou plusieurs modèles de dent représentant la ou les dents non conformes, respectivement, dans le modèle intermédiaire actif ;
5) déformation du modèle intermédiaire actif jusqu'à obtenir un modèle actualisé compatible avec au moins une desdites images actualisées, dite « image actualisée de déformation »;
6) conception, à partir du modèle actualisé et du modèle final, d'une gouttière actualisée conformée pour modifier l'arcade depuis sa configuration réelle à l'instant actualisé vers ladite configuration final.

10. Système comportant :
- un appareil personnel, de préférence un téléphone mobile, configuré pour acquérir la ou les images actualisées à l'étape 1),
- un ordinateur chargé avec un programme comprenant des instructions de code de programme pour l'exécution d'une ou plusieurs, de préférence toutes les étapes 2) à 5) et de préférence l'étape 6), lorsque ledit programme est exécuté par un ordinateur, c'esta-dire « configuré pour » exécuter ces étapes ;
- optionnellement, un ordinateur chargé avec un programme configuré pour la fabrication des gouttières à l'étape 7).
